(19) **Europäisches Patentamt / European Patent Office / Office européen des brevets**

(11) **EP 3 078 704 A1**

(12) **EUROPEAN PATENT APPLICATION**
published in accordance with Art. 153(4) EPC

(43) Date of publication:
**12.10.2016 Bulletin 2016/41**

(21) Application number: **14866985.6**

(22) Date of filing: **01.12.2014**

(51) Int Cl.:
*C08J 9/00* (2006.01)    *B32B 5/24* (2006.01)
*B32B 7/02* (2006.01)    *B32B 27/32* (2006.01)

(86) International application number:
**PCT/JP2014/081743**

(87) International publication number:
**WO 2015/083665 (11.06.2015 Gazette 2015/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.12.2013 JP 2013249827**
**28.01.2014 JP 2014013317**
**12.05.2014 JP 2014098284**

(71) Applicant: **Toray Industries, Inc.**
**Tokyo, 103-8666 (JP)**

(72) Inventors:
• **IKOMA, Kei**
**Otsu-shi**
**Shiga 520-8558 (JP)**

• **KUMA, Takuya**
**Otsu-shi**
**Shiga 520-8558 (JP)**
• **OHKURA, Masatoshi**
**Otsu-shi**
**Shiga 520-8558 (JP)**
• **NARITA, Shusaku**
**Otsu-shi**
**Shiga 520-2141 (JP)**
• **TAKEDA, Masanobu**
**Otsu-shi**
**Shiga 520-2141 (JP)**
• **MATSUMURA, Kazuya**
**Otsu-shi**
**Shiga 520-2141 (JP)**

(74) Representative: **Prüfer & Partner mbB**
**Patentanwälte · Rechtsanwälte**
**Sohnckestraße 12**
**81479 München (DE)**

(54) **POROUS FILM, WATER-RESISTANT AND MOISTURE-TRANSMITTING MATERIAL, AND MEDICAL GARMENT AND PROTECTIVE GARMENT USING WATER-RESISTANT AND MOISTURE-TRANSMITTING MATERIAL**

(57)    (JA) The invention is to provide a porous film excellent in barrier properties, such as blood barrier property and viral barrier property, puncture strength, and moisture permeability. It is also a task to provide a waterproof and moisture-permeable material that uses the porous film excellent in barrier properties, such as blood barrier property and viral barrier property, and reduces the stuffing feeling that a person feels when wearing it and is excellent in the wearing comfortableness. The foregoing tasks are achieved by a porous film whose degree of moisture permeability is greater than or equal to 150 g/m²·h, and whose puncture strength is greater than or equal to 100 N/mm, and whose blood barrier property is class 4 or higher, a porous film whose degree of moisture permeability greater than or equal to 150 g/m²·h, and whose puncture strength is greater than or equal to 100 N/mm, and whose viral barrier property is class 3 or higher, or a porous film whose degree of moisture permeability is greater than or equal to 150 g/m²·h, and whose puncture strength is greater than or equal to 100 N/mm, and whose blood barrier property is class 4 or higher, and whose viral barrier property is class 3 or higher.

EP 3 078 704 A1

**Description**

**Technical Field**

The invention relates to a porous film excellent in barrier properties, such as blood barrier property and viral barrier property, puncture strength, and moisture permeability. Furthermore, the invention relates to a waterproof and moisture-permeable material that uses the porous film which is excellent in barrier properties, such as blood barrier property and viral barrier property, and which reduces stuffing feeling that is felt by a person who wears it and thus is excellent in the wearing comfortableness. Still further, the invention relates to a medical clothing and a protective clothing that use the foregoing waterproof and moisture-permeable material.

**Background Art**

Surgical gowns have been known as surgery suits that doctors and nurses wear. The surgical gown is excellent in bacteria barrier property, blood barrier property, etc., and is also excellent in dustproofness. However, because of being poor in breathability and moisture permeability, the surgical gown has shortcomings of, when worn, causing the wearer to strongly feel stuffing feeling and therefore being poor in the wearing comfortableness. Therefore, an operating underwear called scrub suit is worn under the surgical gown so as to reduce that stuffing feeling and improve the wearing comfortableness.

Thus, it is a general practice to wear a scrub suit when waiting and wear a surgical gown over the scrub suit when carrying out an operation or the like. However, at locations of emergency medical services or the like where there is no time to lose, it is difficult to spare a time to put on a gown and it is sometimes the case that a doctor or a nurse has to become engaged in a surgery without wearing a surgical gown. Therefore, from such sites, there is a demand for a medical clothing that has characteristics of both a scrub suit and a surgical gown, that is, achieves both barrier properties, such as a bacteria barrier property and a blood barrier property, and wearing comfortableness. Furthermore, there exist protective clothings that are excellent in bacteria barrier property, blood barrier property, etc., and is excellent also in dustproofness. However, because of being poor in breathability and moisture permeability, those protective clothings have shortcomings of causing, when worn, the wearer to strongly feel stuffing feeling and therefore being poor in the wearing comfortableness.

Therefore, it has been considered that a film, such as a polyolefin film, a fluorine-based film, a polycarbonate polyurethane based film, a silicone polyurethane based film, or a chlorosulphonated polyethylene film, is layered over and adhered to a knitted or woven fabric that uses a cotton spun yarn as a component yarn so that this film prevents infiltration of germs (viruses), such as the AIDS germ (virus), the hepatitis germ (virus) (for example, Patent documents 1 and 2). By using the foregoing laminate in a textile, good sweat absorbency, water absorbency and texture feel can be realized. This is a form more or less close to perfection as a medical woven or knitted fabric. However, this woven or knitted fabric is provided with the film layered on and adhered to the fabric in order to inhibit penetration of germs and viruses. Therefore, the woven or knitted fabric still has problems of lacking light-weight properties and softness and of, because of considerable blockage of air by the film, being unable to sufficiently reduce the stuffing feeling and being poor in the wearing comfortableness, and so on. Furthermore, improving the fiber for use in the woven fabric to a fiber such as a core-clad fiber so as to improve the barrier properties and the wearing comfortableness has been considered (for example, Patent document 3). By using the foregoing woven fabric as a textile, good sweat absorbency, water absorbency and texture feel can be realized and the penetration of germs and viruses can be inhibited. However, there still exist problems that the puncture strength is low and, in some cases, during operation at a site, such as surgery or the like, the woven fabric breaks and the barrier properties deteriorate so that the barrier properties of the protective clothing deteriorate.

**Prior Art Documents**

**Patent Documents**

Patent document 1: Japanese Unexamined Patent Publication (Kokai) No. HEI 9-78464
Patent document 2: Published Japanese Translation of PCT International Publication No. JP 2005-515912
Patent document 3: Japanese Unexamined Patent Publication (Kokai) No. 2013-53386

## Summary of the Invention

### Problems to be Solved by the Invention

A task of the invention is to solve the foregoing problems. That is, a task of the invention is to provide a porous film excellent in barrier properties, such as blood barrier property and viral barrier property, puncture strength, and moisture permeability. Furthermore, a task of the invention is to provide a waterproof and moisture-permeable material that uses the foregoing porous film which is excellent in barrier properties, such as blood barrier property and viral barrier property, and which reduces stuffing feeling that a person feels when wearing it and is excellent in the wearing comfortableness. Still further, a task of the invention is to provide a medical clothing and a protective clothing each of which uses the foregoing waterproof and moisture-permeable material and is excellent in barrier properties, such as blood barrier property and viral barrier property, and each of which reduces stuffing feeling that a person feels when wearing it and is excellent in the wearing comfortableness.

### Means for Solving the Problems

In order to solve the foregoing tasks, the invention adopts the following means.

(1) A porous film whose degree of moisture permeability is greater than or equal to 150 $g/m^2 \cdot h$, and whose puncture strength is greater than or equal to 100 N/mm, and whose blood barrier property is class 4 or higher;
(2) A porous film whose degree of moisture permeability is greater than or equal to 150 $g/m^2 \cdot h$, and whose puncture strength is greater than or equal to 100 N/mm, and whose viral barrier property is class 3 or higher; and
(3) A porous film whose degree of moisture permeability is greater than or equal to 150 $g/m^2 \cdot h$, and whose puncture strength is greater than or equal to 100 N/mm, and whose blood barrier property is class 4 or higher, and whose viral barrier property is class 3 or higher.
(4) The porous film according to any one of (1) to (3), wherein an area thermal shrinkage ratio subsequent to processing at 130°C for one hour is less than or equal to 10%;
(5) The porous film according to any one of (1) to (4), which includes a polyolefin resin;
(6) The porous film according to (5), wherein the polyolefin resin is polypropylene;
(7) A substrate for a medical textile which uses the porous film according to any one of (1) to (6);
(8) A waterproof and moisture-permeable material in which at least a fiber layer and the porous film according to any one of (1) to (6) are layered on each other, wherein mutually adjacent ones of layers that constitute the waterproof and moisture-permeable material are adhered to each other and the mutually adjacent layers are adhered at an area that, in terms of a unit area of the waterproof and moisture-permeable material, is less than or equal to 50% of the unit area;
(9) The waterproof and moisture-permeable material according to (8), wherein a melting point difference between materials that constitute the fiber layer and the porous film is less than or equal to 40°C;
(10) The waterproof and moisture-permeable material according to (8) or (9), whose water pressure resistance is greater than or equal to 30 kPa;
(11) A medical clothing that uses the waterproof and moisture-permeable material according to any one of (8) to (10);
(12) A protective clothing that uses the waterproof and moisture-permeable material according to any one of (8) to (10); and
(13) A production method for the waterproof and moisture-permeable material according to any one of (8) to (10), the production method for the waterproof and moisture-permeable material which includes the step of superposing mutually adjacent layers that constitute the waterproof and moisture-permeable material on each other and the step of performing a heat treatment on a to-be-adhered site on the superposed mutually adjacent layers.

### Advantageous Effects of the Invention

The invention can provide a porous film excellent in barrier properties, such as blood barrier property and viral barrier property, puncture strength, and moisture permeability. Furthermore, the invention can provide a waterproof and moisture-permeable material that uses the foregoing porous film which is excellent in barrier properties, such as blood barrier property and viral barrier property, and which reduces the stuffing feeling that a person feels when wearing it and is excellent in the wearing comfortableness. Still further, the invention can provide a medical clothing and a protective clothing each of which uses the foregoing waterproof and moisture-permeable material and is excellent in barrier properties, such as blood barrier property and viral barrier property, and each of which reduces the stuffing feeling that a person feels when wearing it and is excellent in the wearing comfortableness.

**Description of Preferred Embodiments**

The porous film in the waterproof and moisture-permeable material of the invention has excellent barrier properties, an excellent puncture strength for maintaining the excellent barrier properties, and an excellent moisture permeability for comfortableness of a wearer. In the invention, the term barrier properties means blood barrier property, viral barrier property, water resistance, etc. Generally, a porous film excellent in barrier properties and puncture strength is poor in moisture permeability, whereas a porous film excellent in moisture permeability is poor in barrier property and puncture strength. However, a porous film in the waterproof and moisture-permeable material of the invention simultaneously has excellent barrier properties, an excellent puncture strength, and an excellent moisture permeability, as mentioned above.

**<Porous film>**

The porous film of the invention is a film having many small through holes that extend through two surfaces of the film and that have gas permeability. The resin that forms the porous film may be any one of polyolefin resin, polycarbonate, polyamide, polyimide, polyamide imide, aromatic polyamide, fluorine-based resin, etc. Among these, polyolefin resin is desirable from the viewpoint of heat resistance, formability, reduction of production cost, chemical resistance, oxidation and reduction resistance, etc.

As a monomer component that forms the foregoing polyolefin resin, for example, compounds having a carbon-carbon double bond, such as ethylene, propylene, 1-butene, 1-pentene, 3-methylpentene-1, 3-methyl-1-butene, 1-hexene, 4-methyl-1-pentene, 5-ethyl-1-hexene, 1-heptene, 1-octene, 1-decene, 1-dodecene, 1-tetradecene, 1-hexadecene, 1-heptadecene, 1-octadecene, 1-eicosene, vinyl cyclohexene, styrene, allylbenzene, cyclopentene, norbornene, 5-methyl-2-norbornene, etc. can be cited. Homopolymers of the foregoing monomer components, copolymers composed of at least two or more species selected from the group consisting of the foregoing monomer components, compositions obtained by blending these homopolymers and the copolymers, etc. can be cited. But the resin that forms the porous film is not limited to these. Besides the foregoing monomer components, for example, vinyl alcohol, maleic anhydride, etc., may be copolymerized or graft-polymerized. But the resin that forms the porous film is not limited to these. As the substrate for the medical textile, a polyethylene that uses ethylene as a monomer component and/or a polypropylene that uses propylene as a monomer component are preferable. In particular, from the viewpoint of heat resistance, gas permeability, porosity, etc., the polypropylene that uses propylene as a monomer component is preferable, and it is preferable that the polypropylene be a main component. In the invention, the "main component" means that the ratio of a certain component in the entire components is greater than or equal to 50 mas%, more preferably greater than or equal to 80 mas%, even more preferably greater than or equal to 90 mas%, and most preferably greater than or equal to 95 mas%.

The method for forming through holes in the porous film may be either one of a wet method and a dry method.

The wet method is a method that forms voids by using a solvent. Concretely, a method in which a polyolefin resin is used as a matrix resin, a to-be-extracted substance that is extracted following the sheeting of the resin is added and mixed, the resin is sheeted, and after biaxial drawing or before the drawing, only the to-be-extracted substance is extracted by using a good solvent for the to-be-extracted substance, so as to form voids in the matrix resin is cited, and various propositions have been made.

The dry method is a method that forms voids during the drawing following film formation. Concretely, a method in which a lamella structure in the sheeted yet-to-be-drawn film is controlled by adoption of low temperature extrusion and high draft ratio at the time of melt extrusion, or the like, and the film is uniaxially drawn to cause cleavage at the lamella interface and therefore form voids (a so-called lamella drawing method) has been proposed. Besides, a method in which an inorganic particle or a resin incompatible with a polypropylene that is a matrix resin or the like in the form of particle is added in a large amount to form a sheet, and the sheet is drawn so that cleavage is caused to occur at an interface between the particle and the polypropylene resin so that voids are formed has also been proposed. Furthermore, a great number of proposals of a so-called $\beta$ crystal method in which a difference between crystal densities of an $\alpha$-type crystal ($\alpha$ crystal) and a $\beta$-type crystal ($\beta$ crystal), which are crystal polymorphs of polypropylene, and crystal transition are utilized to form voids in the film have been made.

In order to form through holes in the film by using the P crystal method, the $\beta$ crystal-forming ability of the porous film is preferred to be greater than or equal to 40%. If the P crystal-forming ability is less than 40%, the amount of $\beta$ crystal is small at the time of film production and therefore the number of voids formed in the film through utilization of the transition to the $\alpha$ crystal is small, so that there are cases where only a film with low permeability is obtained. From these viewpoints, the $\beta$ crystal-forming ability is more preferred to be greater than or equal to 65% and even more preferred to be greater than or equal to 70%. On the other hand, the upper limit of the P crystal-forming ability is not particularly limited. However, achievement of an upper limit exceeding 99.9% requires addition of a large amount of a $\beta$ crystal nucleating agent mentioned below or a very high stereoregularity of the polypropylene resin used, results in decreased film formation stability or the like, and therefore is low in industrial practical value. From such industrial viewpoints, the P crystal-forming ability is preferred to be less than or equal to 99.9% and more preferred to be less than or equal to 95%.

In order to control the $\beta$ crystal-forming ability to 40% or higher, it is preferable to use a polypropylene resin whose isostatic index is high or use as an additive a crystallization nucleating agent called $\beta$ crystal nucleating agent which selectively causes $\beta$ crystal to form if added into the polypropylene resin. As the P crystal nucleating agent, for example, alkali or alkaline earth metal salts of carboxylic acids, such as calcium 1,2-hydroxystearate and magnesium succinate, amide based compounds represented by N,N'-dicyclohexyl-2,6-naphthalene dicarboxyamide, tetraoxaspiro compounds, such as 3,9-bis[4-(N-cyclohexylcarbamoyl)phenyl]-2,4,8,10-tetraoxaspiro [5.5] undecane, aromatic sulfonate compounds, such as sodium benzene sulfonate and sodium naphthalene sulfonate, imide carboxylic acid derivatives, phthalocyanine-based pigments, and quinacridone-based pigments can be preferably cited. In particular, amide based compounds disclosed in Japanese Unexamined Patent Publication (Kokai) No. HEI 5-310665 can be preferably used. The amount of the P crystal nucleating agent added is preferred to be greater than or equal to 0.05 mas% and more preferred to be greater than or equal to 0.1 mas% with reference to the entire polypropylene resin. If the amount is less than 0.05 mas%, there are cases where the formation of $\beta$ crystal is insufficient and therefore the gas permeability of the porous film is low. On the other hand, if the amount of the P crystal nucleating agent added exceeds 0.5 mas% with reference to the entire polypropylene resin, there are cases where coarse and large voids are formed and the changes in physical properties at the time of organic solvent swabbing or desiccation become large. Therefore, the amount is preferred to be less than or equal to 0.5 mas% and more preferred to be less than or equal to 0.3 mas%.

As for the polypropylene resin that constitutes the porous film of the invention, the melt flow rate (hereinafter, which is written as MFR and whose measurement conditions are 230°C and 2.16 kg) is preferred to be within the range of 2 to 30 g/10 min and is also preferred to be an isostatic polypropylene resin. If the MFR is less than 2 g/10 min, there are cases where the melt viscosity of the resin becomes high so that high-precision filtration becomes difficult and the quality level of the film becomes low. From such viewpoints, the MFR is more preferred to be greater than or equal to 3 g/10 min. If the MFR exceeds 30 g/10 min, there are cases where the molecular weight becomes excessively low so that film breakage during drawing likely occurs and productivity decreases. From such viewpoints, the MFR is more preferred to be less than or equal to 20 g/10 min.

Furthermore, in the case where an isostatic polypropylene resin is used, the isotactic index is preferred to be greater than or equal to 90% and more preferred to be greater than or equal to 95%. Furthermore, the upper limit is preferred to be less than or equal to 99.9% and more preferred to be less than or equal to 99%. If the isotactic index is less than 90%, there are cases where the crystallinity of the resin is low so that it is difficult to achieve high gas permeability.

In the case where polypropylene resin is used in the invention, homopolypropylene resin can of course be used and, from the viewpoint of the stability and the film production property during the film formation step and the uniformity of physical properties, a resin obtained by copolymerizing polypropylene with an ethylene component or an $\alpha$-olefin component, such as butene, hexene, and octene, in a range less than or equal to 5 mas%, more preferably, less than or equal to 2.5 mas%, can also be used. Incidentally, the form of introduction of the comonomer (copolymerization component) into polypropylene may be either one of random copolymerization and block copolymerization.

Furthermore, as for the aforementioned polypropylene resin, it is preferable to add a high-MFR isostatic polypropylene whose MFR is greater than or equal to 70 g/10 min, preferably greater than or equal to 100 g/10 min, and further preferably greater than or equal to 500 g/10 min, in view of improvement in moisture permeability. Usually, the high-MFR isostatic polypropylene whose MFR is greater than or equal to 70 g/10 min is poor in drawability and brings about a decrease in strength, and therefore has not been used in the field of films. However, it is considered that if the whole polypropylene resin, when assumed to be 100 mas%, contains 0.1 to 20 mas% of the high-MFR isostatic polypropylene, the small amount of the high-MFR isostatic polypropylene added will increase the molecular chain end concentration at a crystal interface and promote formation of pores at the crystal interface during drawing, that is, will work as a pore-opening assistant so that the opening of pores uniformly occurs, whereby contradictory characteristics, that is, being excellent in barrier properties and, at the same time, being excellent in moisture permeability, can both be achieved. From these viewpoints, when the whole polypropylene resin is assumed to be 100 mas%, it is preferable that the high-MFR isostatic polypropylene be contained at an amount of preferably 1 mas% or greater and further preferably 2 mas% or greater; furthermore, the upper limit thereof is more preferred to be less than or equal to 10 mas% and even more preferred to be less than or equal to 5 mas% from the viewpoint of favorably achieving balanced characteristics of the drawability, the degree of moisture permeability, the barrier properties, and the puncture strength.

The polypropylene resin that forms the porous film of the invention may contain various additives, such as an antioxidant, a heat stabilizer, a light stabilizer, a neutralization agent, an antistatic agent, and a lubricant made of an organic particle and, furthermore, an antiblocking agent, a filling agent, an incompatible polymer, and so on as long as the advantageous effects of the invention are not impaired. In particular, for the purpose of inhibiting the oxidation degradation due to the thermal history of the polypropylene resin, addition of an antioxidant is preferable. The amount of the antioxidant added is preferred to be less than or equal to 2 mass parts relative to 100 mass parts of the polypropylene resin and, more preferably less than or equal to 1 mass part, and even more preferably less than or equal to 0.5 mass part. However, inorganic particles fall off in some cases and will likely have adverse effects at the time of medical operation, and therefore are preferred not to be added.

As for the porous film of the invention, the degree of moisture permeability, which is an evaluation scale for moisture permeability, is preferred to be greater than or equal to 150 $g/m^2 \cdot h$. If the degree of moisture permeability is less than 150 $g/m^2 \cdot h$, there are cases where a person, when wearing a medical protective clothing whose medial textile uses as its substrate the porous film of the invention, feels stuffing feeling and thus the wearing comfortableness is low. From the viewpoint of favorable achievement in both barrier property and puncture strength, the upper limit of the degree of moisture permeability is realistically 2,000 $g/m^2 \cdot h$. From the viewpoint of the wearing comfortableness, the upper limit thereof is preferred to be 200 to 2,000 $g/m^2 \cdot h$, more preferred to be 300 to 2,000 $g/m^2 \cdot h$, and even more preferred to be 350 to 2,000 $g/m^2 \cdot h$. Incidentally, the degree of moisture permeability is evaluated by the A-1 method described in JIS L1099:2012. The degree of moisture permeability can be controlled by adjusting the amount of the β crystal nucleating agent added in the raw material and the crystallization temperature and adjusting the content of the high-molecular weight isostatic polypropylene contained in the raw material. For example, by making the content rate of the β crystal nucleating agent higher in the raw material within the range of 0.05 to 0.5 mas%, making the crystallization temperature high, or making the content rate of the high-MFR isostatic polypropylene in the raw material higher within the range 0.1 to 20 mas%, the degree of moisture permeability can be increased.

As for the porous film of the invention, the puncture strength is preferred to be greater than or equal to 100 N/mm. If the puncture strength is less than 100 N/mm, there are cases where when the porous film of the invention is used as a substrate for a medical textile, the processability at the time of sewing decreases or where in the case of a medical protective clothing whose medial textile uses as its substrate the porous film of the invention, the porous film breaks and the barrier properties of the porous film decrease during operation at a site, such as surgery or the like, so that the barrier properties as a protective clothing decrease. From the viewpoint of favorable achievement in both barrier property and degree of moisture permeability, the upper limit of the puncture strength is realistically 1,000 N/mm. From the viewpoint of processability and the ease of operation at a site, the upper limit is preferred to be 150 to 1000 N/mm and more preferred to be 200 to 1000 N/mm. Incidentally, the puncture strength is calculated in terms of a puncture strength per a thickness of 1mm. The puncture strength can be controlled by adjusting the temperature of the cast drum, the draw ratio and temperature in the lengthwise direction, the lateral draw speed and ratio, the temperature and the time in the heat treatment step, and the relaxation rate in the relaxation zone. For example, high strength can be achieved by increasing the draw temperature in the lengthwise direction to a higher temperature within the range of 90 to 140°C, and the puncture strength can be made higher by increasing the draw ratio in the lengthwise direction to a higher ratio within the range of 3 to 7 times, making the lateral draw speed faster within the range of 500 to 10,000%/min, increasing the lateral draw ratio to a higher ratio within the range of 4 to 15 times, increasing the temperature in the heat treatment step to a higher temperature within the range of 140 to 170°C, or making the relaxation rate in the relaxation zone higher within the range of 5 to 35%.

As for the porous film of the invention, it is preferable that the blood barrier property be class 4 or higher. If the blood barrier property is lower than class 4, there are cases where the barrier properties of the medical protective clothing whose medial textile uses as its substrate the porous film of the invention become insufficient and blood may permeate through the medical protective clothing depending on the surgery. From the viewpoint of barrier properties, the blood barrier property is preferred to be class 5 or higher and more preferred to be class 6. Incidentally, the blood barrier property is evaluated on the basis of the procedure D described in JIS T8060:2007. The blood barrier property can be controlled by adjusting the temperature of the cast drum, the draw ratio and the temperature in the lengthwise direction, the lateral draw speed and ratio, the temperature and the time in the heat treatment step, and the relaxation rate in the relaxation zone. For example, by increasing the draw temperature in the lengthwise direction to a higher temperature within the range of 90 to 140°C, increasing the draw ratio in lengthwise direction to a higher ratio within the range of 3 to 7 times, making the lateral draw speed faster within the range of 500 to 10,000%/min, increasing the lateral draw ratio to a higher ratio within the range of 4 to 15 times, increasing the temperature in the heat treatment step to a higher temperature within the range of 140 to 170°C, or making the relaxation rate in the relaxation zone higher within the range of 5 to 35%, the blood barrier property can be made high.

As for the porous film of the invention, the viral barrier property is preferred to be class 3 or higher. If the viral barrier property is lower than class 3, there are cases where the barrier properties of a medical protective clothing whose medial textile uses as its substrate the porous film of the invention become insufficient and germs or viruses may permeate through the medical protective clothing depending on the surgery. From the viewpoint of barrier properties, the viral barrier property is preferred to be class 4 or higher, more preferably class 5 or higher, and even more preferably class 6. Incidentally, the viral barrier property is evaluated on the basis of the procedure D1 described in JIS T8061:2010. The viral barrier property can be controlled by adjusting the temperature of the cast drum, the draw ratio and the temperature in the lengthwise direction, the lateral draw speed and ratio, the temperature and the time in the heat treatment step, or the relaxation rate in the relaxation zone. For example, by increasing the draw temperature in the lengthwise direction to a higher temperature within the range of 90 to 140°C, increasing the draw ratio in the lengthwise direction to a higher ratio within the range of 3 to 7 times, making the lateral draw speed faster within the range of 500 to 10,000%/min, increasing the lateral draw ratio to a higher ratio within the range of 4 to 15 times, increasing the temperature in the heat treatment step to a higher temperature within the range of 140 to 170°C, or making the relaxation rate in the relaxation zone higher within the range of 5 to 35%, the viral barrier property can be made high.

As for the method that favorably achieve balanced characteristics in the degree of moisture permeability, the barrier properties, and the puncture strength and that obtain the porous film of the invention, control can be achieved by adjusting the amount of the β crystal nucleating agent added in the raw material and the crystallization temperature thereof and by bringing the amount of the high-MFR isotatic polypropylene added in the raw material, the temperature of the cast drum, the draw ratio and the temperature in the lengthwise direction, the lateral draw speed and ratio, the temperature and the time in the heat treatment step, and the relaxation rate in the relaxation zone into ranges stated below. In particular, in the case where only process conditions, such as the temperature of the cast drum, the draw ratio and the temperature in the lengthwise direction, the lateral draw speed and ratio, the temperature and the time in the heat treatment step, and the relaxation rate in the relaxation zone, have been adjusted, the barrier properties and the strength can be made high but the degree of moisture permeability becomes insufficient. Therefore, only after the amount of the β crystal nucleating agent added in the raw material and the crystallization temperature thereof were brought into specific ranges and a specific amount of the high-MFR isotatic polypropylene was caused to be contained in the raw material, balanced characteristics in the degree of moisture permeability, the barrier properties, and the puncture strength, was able to be favorably achieved.

As for the porous film of the invention, it is preferable that the area thermal shrinkage ratio subsequent to the processing at 130°C for one hour be less than or equal to 10%. The medical protective clothing is subjected to an autoclave sterilization process in some cases. Usually, the autoclave sterilization process is performed for 20 minutes after the temperature is raised to 121°C by saturated steam at 2 atmospheres. Therefore, where the area thermal shrinkage ratio subsequent to the processing at 130°C for one hour is greater than 10%, there are cases where the porous film shrinks and the moisture permeability decreases so that the wearing comfortableness becomes low. The area thermal shrinkage ratio subsequent to the processing at 130°C for one hour is more preferred to be 0 to 10%, more preferred to be 0 to 7%, and even more preferred to be 0 to 5%.

As for the porous film of the invention, the film thickness is preferred to be greater than or equal to 5 μm. If the thickness is less than 5 μm, there are cases where the film ruptures at the time of processing or the time of use. The film thickness is more preferable if it is greater than or equal to 10 μm. The upper limit thereof is preferred to be less than or equal to 500 μm.

Hereinafter, a production method for the porous film of the invention will be described with reference to a concrete example. Incidentally, the production method for the porous film of the invention is not limited to this.

As mixing methods for the resin raw material for use, there are dry blending, melt blending, etc. Since in this invention, the viscosity of the polypropylene resin for use can sometimes greatly vary, there are cases where performing the mixture of the raw material by dry blending results in non-uniform dispersion of resins different in viscosity when the resin was formed into a sheet and, as a result, characteristics become insufficient. Therefore, it is preferable to adopt the melt blending. The extruder for use for the melt blending may be either a single-screw extruder or a twin-screw extruder. However, from the viewpoint of being capable of mixing with high shear and allowing the mixing ratio to be easily controlled to a constant ratio and of uniformity of the raw material, resin deterioration suppression, and productivity, it is preferable that the melt blending can be performed by the twin-screw extruder.

Raw materials are supplied from a scale hopper into a twin-screw extruder so that 96.5 mass parts of a commercially sold homopolypropylene resin whose MFR is 4 g/10 min and 3 mass parts of high-MFR polypropylene resin whose MFR is 1,000 g/10 min as polypropylene resins, 0.3 mass part of N,N'-dicyclohexyl-2,6-naphthalene dicarboxyamide as a β crystal nucleating agent, and 0.2 mass part of an antioxidant are mixed at the aforementioned ratios, and is subjected to melt-kneading, discharged in a strand form from a die, and cooled and solidified in a water tank at 25°C, and cut into a chip shape so as to prepare a polypropylene raw material (a). On this occasion, the melting temperature is preferred to be 280 to 310°C.

Next, the raw material (a) is supplied into a mono-screw extruder and melt extrusion is performed at 200 to 230°C. Then, after extraneous matters, a modified polymer, etc., are removed by a filter disposed in an intermediate portion of a polymer pipe, the material is discharged from a T die onto the cast drum, whereby an undrawn cast sheet is obtained. As for the cast drum, the surface temperature being 105 to 130°C is preferable from the viewpoint of controlling the β-crystal formability of the cast sheet to a high formability. On this occasion, the formation of end portions of the sheet particularly affects the drawability in the subsequently step, and therefore it is preferable to blow spot air to the end portions so that the end portions closely contact the drum. Furthermore, from a close contact state of the entire sheet onto the drum, air may be blown to the entire surface by using an air knife according to need.

Next, the obtained cast sheet is biaxially oriented and holes are formed in the film. As methods for biaxial orientation, a sequential biaxial drawing method in which the sheet is drawn in a film's lengthwise direction and then drawn in a width direction or is drawn in a width direction and then drawn in a lengthwise direction, a simultaneous biaxial drawing method in which the sheet is drawn substantially simultaneously in a lengthwise direction and a width direction, etc. can be used. However, from the viewpoint of moisture permeability, puncture strength, and barrier properties, it is preferable to adopt the sequential biaxial drawing method and, particularly, it is preferable to draw the sheet in the lengthwise direction and then draw it in the width direction.

As a concrete draw condition, firstly the cast sheet is controlled to a temperature at which to draw the cast sheet in the lengthwise direction. As for the method for the temperature control, a method that uses a rotation roll whose temperature is controlled, a method that uses a hot air oven, etc. can be adopted. The temperature for the drawing in the lengthwise direction is preferred to be 90 to 140°C. If the temperature for the drawing in the lengthwise direction is less than 90°C, there are cases where the film ruptures, the puncture strength decreases, or the barrier properties decrease. If the temperature for the drawing in the lengthwise direction exceeds 140°C, there are cases where the moisture permeability decreases. A more preferable temperature for the drawing in the lengthwise direction is 110 to 135°C and a particularly preferable temperature for the drawing in the lengthwise direction is 125 to 130°C. The draw ratio in the lengthwise direction is preferred to be 3 to 7 times. If the draw ratio in the lengthwise direction is less than 3 times, there are cases where the moisture permeability decreases. The higher the draw ratio is made, the more improved the moisture permeability becomes. However, if the drawing is performed with the draw ratio in the lengthwise direction exceeding 7 times, there are cases where the film ruptures, the puncture strength decreases, or the barrier properties decrease. From the viewpoint of favorable achievement in all of the moisture permeability, the puncture strength, and the barrier properties, the draw ratio is more preferred to be 4.5 to 6 times. Incidentally, the longitudinal draw speed at this time is preferred to be greater than or equal to 200,000%/min (2001 times/min), and it is more preferable if the longitudinal draw speed is greater than or equal to 250,000%/min (2501 times/min), and it is even more preferable if the longitudinal draw speed is greater than or equal to 300,000%/min (3001 times/min). If the draw speed is increased, the post-biaxial drawing pore structure will form a network in three-dimensional directions so that favorable achievement in both moisture permeability and barrier properties is facilitated. However, if the draw speed is excessively increased, there are cases where film breakage becomes likely to occur at the time of longitudinal drawing and the moisture permeability deteriorates.

The film is introduced into a tenter type drawing machine, with an end portion thereof grasped, to carry out drawing in a width direction. The width-direction draw temperature is preferably 130 to 155°C. If the width-direction draw temperature is less than 130°C, there are cases where the film ruptures, the puncture strength decreases, or the barrier properties decrease. Furthermore, if the width-direction draw temperature exceeds 155°C, there are cases where the moisture permeability decreases. From the viewpoint of favorable achievement in all of the moisture permeability, the puncture strength, and the barrier properties, a more preferable width-direction draw temperature is 140 to 155°C. The width-direction draw ratio is preferred to be 4 to 15 times. If the width-direction draw ratio is less than 4 times, there are cases where the moisture permeability decreases. From the viewpoint of the barrier properties and the puncture strength, the draw ratio is preferred to be a great number of times. However, if the width-direction draw ratio exceeds 15 times, there are cases where the film ruptures so that the productivity decreases or the moisture permeability decreases. From the viewpoint of favorable achievement in all of the moisture permeability, the puncture strength, and the barrier properties, the draw ratio is more preferably 6 to 12 times and even more preferably 8 to 11 times. Incidentally, as for the lateral draw speed at this time, the drawing is preferred to be carried out at 500 to 10,000%/min (6 to 101 times/min) and it is more preferable that the lateral draw speed be 1,500 to 7,000%/min (16 to 71 times/min). The area ratio (longitudinal draw ratio x lateral draw ratio) is preferably 30 to 90 times.

Following the lateral drawing, a heat treatment step is performed in the tenter. Herein, as for the heat treatment step, it is preferable to perform a heat treatment with the post-lateral drawing width maintained, perform a heat treatment while narrowing the width of the tenter and relaxing the film, and perform a heat treatment with the post-relaxation width maintained, from the viewpoint of controlling the moisture permeability, the puncture strength, and the barrier properties.

The heat setting temperature is preferred to be 140 to 170°C. If the heat setting temperature is less than 140°C, there are cases where the puncture strength decreases or the barrier properties decrease. If the heat setting temperature exceeds 170°C, there are cases where the porous film surface melts and the moisture permeability decreases or, furthermore, the porous film shrinks in the width direction and then ruptures during the heat treatment step so that the productivity decreases. From the viewpoint of favorable achievement in all of the moisture permeability, the puncture strength, and the barrier properties, it is more preferable that the heat setting temperature be 150 to 168°C.

The heat treatment time, from the viewpoint of favorable achievement in all of the puncture strength, the barrier properties, and the productivity, is preferred to be greater than or equal to 0.1 second and less than or equal to 10 seconds and it is more preferable if the heat treatment time is greater than or equal to 3 seconds and less than or equal to 8 seconds.

The relaxation rate in the invention is preferred to be 5 to 35%. If the relaxation rate is less than 5%, there are cases where the puncture strength decreases, the barrier properties decrease, or the thermal shrinkage ratio in the width direction in the width direction becomes large. If the relaxation rate exceeds 35%, there are cases where the moisture permeability decreases or irregularities in the physical properties become large. From the viewpoint of favorable achievement in all of the moisture permeability, the puncture strength, and the barrier properties, it is more preferable if the relaxation rate is 10 to 25% and it is even more preferable if the relaxation rate is 15 to 25%.

The relaxation temperature is preferred to be 155 to 170°C. If the relaxation temperature is less than 155°C, there are cases where the shrinkage stress for relaxation decreases so that the foregoing high relaxation rate cannot be achieved, or the puncture strength decreases, or the barrier properties decrease. If the relaxation temperature exceeds 170°C, there are cases where due to the high temperature, polymer around pores melts so that the moisture permeability decreases. From the viewpoint of the moisture permeability, the puncture strength, and the barrier properties, it is more preferable if the relaxation temperature is 160 to 168°C.

The relaxation speed is preferred to be 100 to 1,000%/min. If the relaxation speed is less than 100%/min, there are cases where it is necessary to reduce the film formation speed or increase the length of the tenter so that the productivity is low. If the relaxation speed exceeds 1,000%/min, there are cases where the speed at which the film shrinks becomes less than the speed at which the rail width of the tenter reduces so that the film flutters and breaks inside the tenter irregularities in the width direction become large, or a decrease in planarity occurs. The relaxation speed is more preferred to be 150 to 500%/min.

The post-relaxation heat setting temperature is preferred to be 155 to 170°C. If the post-relaxation heat setting temperature is less than 155°C, there are cases where the shrinkage stress for relaxation decreases so that the foregoing high relaxation rate cannot be attained, or the puncture strength decreases, or the barrier properties decrease. If the post-relaxation heat setting temperature exceeds 170°C, there are cases where due to the high temperature, polymer around pores melts so that the moisture permeability decreases. From the viewpoint of the moisture permeability, the puncture strength, and the barrier properties, it is more preferable if the post-relaxation heat setting temperature is 160 to 168°C. As for the post-heat-treatment-step film, the edge portions gripped by the clips of the tenter are slit and removed, the film is wound up on a core as a product by a winder.

The porous film of the invention is excellent in productivity and excellent in barrier properties, such as blood barrier property and viral barrier property, and reduces the stuffing feeling when a person feels when wearing it and therefore is excellent in the wearing comfortableness. Therefore, the porous film of the invention can be suitably used as a substrate for a medical textile or as a composite with a nonwoven fabric. Furthermore, the porous film of the invention is excellent in barrier properties, such as block barrier property and viral barrier property, and reduces the stuffing feeling that a person feels when wearing it and therefore is excellent in the wearing comfortableness. Therefore, a protective clothing that uses the medical textile, the substrate, or the composite mentioned above can be suitably used as a medical protective clothing and, in particular, a surgery suit.

**<Waterproof and moisture-permeable material>**

The waterproof and moisture-permeable material of the invention is a waterproof and moisture-permeable material in which at least a fiber layer and the aforementioned porous film are layered on each other. In this waterproof and moisture-permeable material, mutually adjacent ones of the various layers that constitute the waterproof and moisture-permeable material are adhered to each other. The mutually adjacent layers are adhered at an area that, in terms of a unit area of the waterproof and moisture-permeable material, is less than or equal to 50% of the unit area. In the invention, at least a fiber layer and a porous film being layered on each other means that the porous film and the fiber layer are joined to form two or more layers. Incidentally, the laminate configuration will be described later.

The waterproof and moisture permeable material of the invention is one that includes all of (a) excellent barrier properties due to the porous film, (b) excellent barrier retention property due to excellent puncture strength of the porous film itself, excellent abrasion strength of the fiber layer, etc., and (c) excellent moisture permeability due to the excellent moisture permeability of the porous film itself and the waterproof and moisture-permeable material having a specific bonded area ratio and that is particularly suitable for use in a medical clothing or a protective clothing.

**<Porous film for use in waterproof and moisture-permeable material>**

As for the porous film in the waterproof and moisture-permeable material of the invention, the foregoing porous film is used.

**<Fiber layer for use in waterproof and moisture-permeable material>**

Subsequently, the fiber layer in the waterproof and moisture-permeable material of the invention will be described.

The fiber layer used in the waterproof and moisture-permeable material of the invention gives the waterproof and moisture-permeable material sufficient tensile and abrasion strengths, and softness and a texture, such as an appropriate feel. As a cloth configuration used as the fiber layer, fiber structural bodies, such as woven fabric, knitted fabric, nonwoven fabric, and paper, can be cited. Among these, the nonwoven fabric is preferable from the viewpoint of the cost, the tensile strength, and the abrasion strength. As the nonwoven fabric, wet-laid nonwoven fabric, resin bonded dry-laid nonwoven fabric, thermal bonded dry-laid nonwoven fabric, spunbonded dry-laid nonwoven fabric, needle punched dry-laid nonwoven fabric, water jet punched dry-laid nonwoven paper fabric, flash spun dry-laid nonwoven fabric, etc., as well as nonwoven fabric produced by a paper making method capable of achieving a uniform basis weight and a uniform thickness can be preferably used. Among these, the spunbonded dry-laid nonwoven fabric is preferable in view of the cost, the tensile strength, and the abrasion strength.

As a material of the fiber layer, polyolefin, such as polyethylene and polypropylene, polyester, such as polyethylene terephthalate and polylactic acid, polycarbonate, polystyrene, polyphenylene sulfite, and fluorine-based resin, and mixtures of these, etc. can be cited. Among these, materials having polyolefin or polylactic acid as a main component are preferable in light of the electret performance in the case where the fiber layer is subjected to an electret processing. Furthermore, among polyolefins, polyolefins having polypropylene as a main component are further preferable, and the material is preferred to be a resin of the same kind as that of the porous film described above, from the viewpoint of the adhesiveness at the time of being stuck to the porous film. Herein, being a resin of the same kind means being the same in terms of the composition of a monomer that constitutes a main component. Furthermore, from the viewpoint of improvement of the adhesion force between the fiber layer and the porous film, the lower limit of the melting point of the material that constitutes the fiber layer is preferred to be greater than or equal to 135°C, more preferred to be greater than or equal to 150°C, and even more preferred to be greater than or equal to 155°C. On the other hand, the upper limit of the melting point of the material that constitutes the fiber layer is preferred to be less than or equal to 175°C and more preferred to be less than or equal to 170°C.

The tensile strength of the fiber layer is preferred to be greater than or equal to 5 N/mm, from the viewpoint of making the tensile strength of the waterproof and moisture-permeable material excellent. Even more preferably, the tensile strength is greater than or equal to 10 N/mm and, even more preferably, greater than or equal to 15 N/mm. On the other hand, the upper limit of the tensile strength is preferred to be less than or equal to 200 N/mm, from the viewpoint of securing a moderate softness of the waterproof and moisture-permeable material. Incidentally, the tensile strength is calculated as a tensile strength per a thickness of 1 mm.

The bursting strength of the fiber layer, from the viewpoint of making the bursting strength of the waterproof and moisture-permeable material excellent, is preferred to be greater than or equal to 300 kPa, preferably greater than or equal to 400 kpa, and even more preferably greater than or equal to 500 kPa. On the other hand, the upper limit of the bursting strength is less than or equal to 2000 kPa and is preferred to be less than or equal to 1500 kPa. If the bursting strength is less than or equal to 2000 kPa, the softness and the lightweight properties of the waterproof and moisture-permeable material when the fiber layer has been incorporated in the waterproof and moisture-permeable material can be made excellent.

The abrasion strength of the fiber layer is preferred to be class 3 or higher, from the viewpoint of making the abrasion strength of the waterproof and moisture-permeable material excellent. Even more preferably, the abrasion strength is grade 4 or higher.

If these conditions are satisfied, the lower limit of a preferable thickness of the fiber layer is greater than or equal to 0.01 mm and, more preferably, greater than or equal to 0.1 mm. On the other hand, the upper limit of the thickness is less than or equal to 5 mm and, preferably, less than or equal to 1 mm.

Furthermore, the lower limit of a preferable basis weight of the fiber layer is greater than or equal to 10 g/m$^2$ and, preferably, greater than or equal to 20 g/m$^2$. On the other hand, the upper limit of the basis weight is less than or equal to 200 g/m$^2$ and, preferably, is in the range of 100 g/m$^2$ of less.

As for the fiber layer for use in the invention, it is preferable if the fiber layer have been subjected to a functional processing such as an antistatic finish. As for the antistatic finish, a method in which the surface is subjected to a processing with an electroconductive polymer and a method in which the surface is subjected to a processing with a hygroscopic polymer are preferable.

At this time, it is advisable to perform the processing on the surface opposite to the surface that contacts the porous film layered thereon. If the antistatic-finished portion contacts the porous film, there are cases where the electret performance of the fiber layer decreases.

**<Various characteristics of waterproof and moisture-permeable material>**

As for the moisture permeability of the waterproof and moisture-permeable material of the invention, from the viewpoint of securing excellent wearing characteristic, the degree of moisture permeability that is an evaluation scale for the moisture permeability is greater than or equal to 150 g/m$^2$·h, preferably greater than or equal to 200 g/m$^2$·h, and even more preferably greater than or equal to 300 g/m$^2$·h. On the other hand, the upper limit thereof is not particularly limited but is preferred to be less than or equal to 1000 g/m$^2$·h, from the viewpoint of making the barrier properties more excellent. Incidentally, the degree of moisture permeability is evaluated by the A-1 method described in JIS L1099:2012.

The tensile strength of the waterproof and moisture-permeable material of the invention is preferred to be greater than or equal to 5 N/50 mm, from the viewpoint of practically when a person wearing the material works. The tensile strength is more preferably greater than or equal to 10 N/50 mm and even more preferably greater than or equal to 15 N/50 mm. On the other hand, the upper limit thereof is not particularly limited but is preferred to be less than or equal to 200 N/50 mm, from the viewpoint of securing a moderate softness of the waterproof and moisture-permeable material.

As for the bursting strength of the waterproof and moisture-permeable material of the invention, from the viewpoint of further inhibiting breakage of the material due to external stress when a person is wearing the material, 300 kPa or greater is preferable, 400 kpa or greater is more preferable, and 500 kPa or greater is even more preferable. On the other hand, the upper limit thereof is not particularly limited but 2000 kPa or less is preferable and 1500 kPa is more preferable. If the bursting strength is less than or equal to 2000 kPa, the waterproof and moisture-permeable material becomes an excellent material due to the softness and the lightweight properties of the waterproof and moisture-permeable material.

As for the abrasion strength of the waterproof and moisture-permeable material of the invention, from the viewpoint of making excellent resistant to scratch of the surface due to external stress occurring when the material is worn by a person, it is preferable that the external appearance evaluation determined when the surface of the waterproof and moisture-permeable material is abraded be class 3 or higher. Even more preferably, the surface of the waterproof and moisture-permeable material is grade 4 or higher.

The water pressure resistance of the waterproof and moisture-permeable material of the invention, from the viewpoint of preventing penetration of water from outside when the material is worn by a user, is preferred to be greater than or equal to 30 kPa, more preferred to be greater than or equal to 50 kPa, and even more preferred to be greater than or equal to 65 kPa. On the other hand, the upper limit of the water pressure resistance is preferred to be less than or equal to 300 kPa. If the water pressure resistance is less than or equal to 300 kPa, an appropriate number of through holes in the porous film can be provided and the moisture permeability of the waterproof and moisture-permeable material can be made excellent. Furthermore, the water pressure resistance of the waterproof and moisture-permeable material can be adjusted also by changing the number of nonwoven fabrics that are further layered on the waterproof and moisture-permeable material.

The blood barrier property of the waterproof and moisture-permeable material of the invention is preferred to be class 4 or higher. Provided that the blood barrier property is class 4 or higher, when the waterproof and moisture-permeable material is employed in a medical clothing or a protective clothing, the barrier properties of the clothing to blood will be excellent. More preferable is 5 or higher. Class 6 is even more preferable.

The viral barrier property of the waterproof and moisture-permeable material of the invention is preferred to be class 3 or higher. Provided that the viral barrier property is class 3 or higher, when the waterproof and moisture-permeable material is employed in a medical clothing or a protective clothing, the barrier properties of the clothing to viruses will be excellent. Class 4 or higher is more preferable, class 5 or higher is even more preferable, and class 6 is particularly preferable.

As for the waterproof and moisture-permeable material of the invention, it is preferable that the basis weight be 15 to 250 $g/m^2$. In the case where the basis weight is less than 15 $g/m^2$, there are cases where the tensile strength, the bursting strength, the abrasion strength, or the water pressure resistance becomes insufficient. From that viewpoint, the basis weight is more preferred to be greater than or equal to 20 $g/m^2$ and even more preferred to be greater than or equal to 30 $g/m^2$. On the other hand, in the case where the basis weight exceeds 250 $g/m^2$, there are cases where when the waterproof and moisture-permeable material is used to form a clothing, the clothing becomes heavy and uncomfortable to wear. From that viewpoint, the basis weight is more preferred to be less than or equal to 150 $g/m^2$ and even more preferred to be less than or equal to 100 $g/m^2$.

As for the fiber layer and the porous film that the waterproof and moisture-permeable material of the invention includes, the melting point difference between the material that constitutes the fiber layer and the material that constitutes the porous film is preferred to be less than or equal to 40°C. More preferably, the melting point difference is less than or equal to 30°C and, even more preferably, less than or equal to 20°C. By lessening the melting point difference between the materials that constitute the porous film and the fiber layer that are layered on each other, the adhesion strength at the adhered portions becomes high. Furthermore, the melting point of the material that constitutes the porous film is preferred to be higher than the melting point of the material that constitutes the fiber layer. Such setting will inhibit the voids of the porous film from being damaged by heat due to the heat treatment at the time of layering, so that an effect of further improving the moisture permeability of the waterproof and moisture-permeable material can be expected. The melting points of the material that constitutes the fiber layer and the material that constitutes the porous film can be measured by using a differential scanning type calorimeter DSC-60 Model made by Shimadzu Corp., details of which will be described later. As for the measurement of the melting points of the materials that constitute the fiber layer and the porous film, measurement may be performed on the fiber layer and the porous film prior to the layering, or from the laminate of the fiber layer and the porous film, the fiber layer and the porous film are peeled off and portions not having been subj ected to heat in the layering step, that is, the portions not adhered, are isolated to measure the melting points of the materials that constitute the respective layers.

As examples of the laminate configuration, (i) to (v) can be cited as follows.

(i) A two-layer configuration having a porous film on a surface that becomes an outer side of a clothing and a fiber layer on a surface that becomes an inner side of the clothing.

(ii) A two-layer configuration having a fiber layer on a surface that becomes an outer side of a clothing and a porous film on a surface that becomes an inner side of the clothing.

(iii) A three-layer configuration in which a fiber layer, a porous film, and fiber layer are in order, with the porous layer sandwiched.

(iv) A five-layer configuration in which two layers that a fiber layer high in abrasion strength and a fiber layer high in tensile strength and bursting strength are superposed and a porous film is sandwiched between fiber laminates obtained by superposing two fiber layers mentioned above.

(v) A four-layer configuration in which a fiber layer, two porous films different in characteristics, and, furthermore, a fiber layer are superposed in this order.

Among these, (iii) the three-layer configuration in which a fiber layer, a porous film, and a fiber layer are in order, with the porous film sandwiched, is preferable. Having the foregoing three-layer configuration, sandwiching a porous film between fiber layers, has an effect of making it less likely that the porous film will be damaged and barrier properties will be lost.

Furthermore, (i) the two-layer configuration having a porous film on a surface that becomes an outer side of a clothing and a fiber layer on a surface that becomes an inner side of the clothing is also preferable. Having the foregoing two-layer configuration makes it possible to make the moisture permeability and the lightweight properties of the waterproof and moisture-permeable material more excellent while securing desired tensile strength and bursting strength of the waterproof and moisture-permeable material.

In the waterproof and moisture-permeable material of the invention, mutually adjacent ones of the layers that constitute the waterproof and moisture-permeable material are adhered. Furthermore, in the waterproof and moisture-permeable material of the invention, it is preferable that mutually adjacent layers are adhered at an area that, in terms of a unit area of the waterproof and moisture-permeable material, is less than or equal to 50% of the unit area. If mutually adjacent layers are adhered with adhesion covering, in terms of a unit area of the waterproof and moisture-permeable material, more than 50% of the unit area, there are cases where the moisture permeability of the waterproof and moisture-permeable material conspicuously decreases so that when the waterproof and moisture-permeable material is employed to form a medial clothing or a protective clothing, good wearing characteristics cannot be obtained. From the foregoing viewpoint, as for the upper limit, 40% or less is preferable, 30% or less is more preferable, and 15% or less is particularly preferable. On the other hand, with regard to the lower limit, from the viewpoint of securing an interlayer adhesion force, a tensile strength, a bursting strength, and a water pressure resistance of the waterproof and moisture-permeable material, 3% or higher is preferable and 5% or higher is more preferable. Incidentally, although the production method will be described later, the ratio of the bonded area per unit area of the waterproof and moisture-permeable material stated above (hereinafter, termed the bonded area ratio) can be adjusted by the design of the pattern of an embossing roll in the case of ultrasonic bonding and by the design of the pattern of a hot embossing roll in the case of thermal bonding through the use of a hot embossing roll whose pattern height is greater than or equal to 1 mm. The patterns of the foregoing individual embossing rolls are not particularly limited but patterns, such as pinpoint patterns, cross patterns, lattice patterns, wave patterns, and hatched patterns, can be used. Considering the adhesion force, sewing, etc. between the porous film and the fiber layer, the pattern is preferred to be left-right symmetrical, and a pinpoint pattern, a cross pattern, a lattice pattern, a wave pattern, a mesh pattern, or the like is preferable.

Furthermore, as for the adhered portions of the waterproof and moisture-permeable material, it is preferable that the fiber that constitutes the fiber layer be partially or entirely fused into a film shape. The thickness of the film shaped portions is preferred to be 0.01 to 0.5 mm. Furthermore, the area of each adhered portion is preferred to be 0.001 $mm^2$ to 100 $mm^2$. The thickness and the area can be found by cutting a section of an adhered portion, taking a magnified image of the area of the section by SEM photography, and performing image processing.

**<Production method for waterproof and moisture-permeable material>**

The production method for the waterproof and moisture-permeable material of the invention is a production method that includes the step of superposing mutually adjacent layers that constitute the waterproof and moisture-permeable material and the step of performing a heat treatment on a to-be-adhered site on the superposed mutually adjacent layers.

In the step of superposing mutually adjacent layers that constitute the waterproof and moisture-permeable material, the layers that constitute the waterproof and moisture-permeable material are the porous film and the fiber layer described above. Then, superposing mutually adjacent layers that constitute the waterproof and moisture-permeable material refers to superposing these as mutually adjacent layers without another layer interposed therebetween. Incidentally, as for the laminate configuration, the foregoing (i) to (v) are cited as preferable examples.

The step of performing a heat treatment on a to-be-adhered site on the superposed mutually adjacent layers is a step in which thermal bonding is performed on a site on the fiber layer or the porous film where adhesion is desired so as to adhere the site, and details thereof will be given below.

As for a method that adheres an interlayer space between layers that constitute the waterproof and moisture-permeable material of the invention, such as a fiber layer and a porous film or the like, illustration will be made using, as an example, adhesion between a fiber layer and a porous film. From the viewpoint of a fact that heat affects not only the sites where adhesion between a fiber layer and a porous film is desired and of inhibition of adhesion at sites other than the sites where adhesion is desired, it is preferable to use an ultrasonic bonding or a thermal bonding that uses a hot embossing roll whose pattern height is greater than or equal to 1 mm and whose surface has been coated with a resin such as fluorine resin.

As for the ultrasonic bonding, a method in which a blade that ultrasonically vibrates and adhesion materials are nipped at a pressure of 0.01 MPa to 1 MPa between embossing rolls having a specific pattern, and the vibrator called blade is vibrated at an ultrasonic vibration of 1 to 50 thousand Hz to fuse and adhere pattern portions in contact with the blade. As for the blade, mainly blades made of titanium highly resistant to abrasion are used, and other materials, such as aluminum or stainless alloys, are also employed. Besides, as for the blade width, a blade that is 10 to 50 cm wide is used.

The thermal bonding that uses a hot embossing roll whose pattern height is greater than or equal to 1mm uses a hot embossing roll whose embossing pattern depth is greater than or equal to 1 mm and, outside the pattern, bonding is performed without applying heat to the cloth. The pattern height refers to the distance between an upper portion and a lower portion of an edge that constitutes the embossing pattern of the hot embossing roll. As for the temperature for the hot embossing, 60°C or higher is preferable, and the temperature is more preferred to be 70°C or higher and even more preferred to be 125°C or higher. On the other hand, the temperature is preferred to be 175°C or lower, more preferably 165°C or lower, and even more preferably 155°C or lower. The hot embossing temperature is preferred to be between the melting point of the material that constitutes the porous film and a temperature that is lower by 30°C than the melting point of the material that constitutes the fiber layer and is more preferred to be between the melting point of the material that constitutes the porous film and the melting point of the material that constitutes the fiber layer. In the case where the hot embossing temperature is between the melting point of the material that constitutes the porous film and the temperature that is lower by 30°C than the melting point of the material that constitutes the fiber layer, influence of the thermal shrinkage of the porous film is unlikely and proper characteristics of the porous film will be easily delivered. Furthermore, as for the nip rolls, those having a silicon rubber whose hardness is 50 to 90° are used. The nip pressure on the hot embossing roll and the nip rolls that nip the hot embossing roll is greater than or equal to 0.5 MPa and, preferably, greater than or equal to 1 MPa and, on the other hand, less than or equal to 10 MPa and, preferably, less than or equal to 5 MPa. Furthermore, because heat is applied from one-side surface (the hot embossing roll), an incident where the material is taken by a nip roll so that processability deteriorates can be prevented. Furthermore, if the hot embossing roll surface is coated with resin such as fluorine resin, the releasability between the hot embossing roll and the material betters and an incident where the porous film is damaged by an edge portion of the hot embossing roll so that barrier properties are impaired can be prevented. Furthermore, it is preferable to adopt as a material of a backing roll provided opposite the hot embossing roll a material, such as a silicon roll, whose hardness is softer than that of a metal roll. If the hardness of the material of the backing roll is softer than that of metal, the porous film being damaged by the thermal bonding step can be inhibited and barrier properties of the waterproof and moisture-permeable material can be improved.

By any one of the foregoing bonding methods, application of heat to sites other than the desired sites of adhesion can be inhibited, so that the damage to the fiber layer and the porous film by the heat treatment is small and the fusion of the fiber layer, the shrinkage of the waterproof and moisture-permeable material due to application of heat to the porous film, etc., can be more inhibited.

The waterproof and moisture-permeable material of the invention is excellent in strength and abrasion strength and is able to inhibit entry of particles, so that the waterproof and moisture-permeable material can be suitably used for medical clothings and protective clothings.

The waterproof and moisture-permeable material of the invention can be suitably used for medical clothings and protective clothings by sewing the material into the forms of jumpers, upper and lower parted waterproof clothings, gowns, etc. In particular, in terms of prevention of entry of pollutants, jumper type protective clothings are preferable.

**Examples**

Various characteristics are measured and evaluated by the following methods.

**(1) β crystal-forming ability**

5 mg of a porous film was collected as a specimen on a pan made of aluminum and was subjected to measurement by using a differential scanning calorimeter (RDC220 made by SEICO Electronics Industrial Co., Ltd.). First, in a nitrogen atmosphere, the temperature is raised from room temperature to 260°C at 10°C/min (first run). After the temperature is maintained for 10 minutes, cooling was performed to 40°C at 10°C/min. After being maintained for 5 minutes, the temperature is raised at 10°C/min again (second run). With regard to the melting peaks observed during this temperature raise, the melting whose peak exists in the temperature region of 145 to 157°C is assumed as the melting peak of the β crystal and the melting whose peak is observed in a range greater than or equal to 158°C is assumed as the melting peak of the α crystal. The amount of heat of fusion for each crystal is found from the area of the region enclosed by the peak and a base line drawing with reference to a flat portion at the high temperature side. When the amount heat of fusion of the α crystal is presented by ΔHα and the amount of heat of fusion of the β crystal is presented by ΔHβ, the value calculated by the following expression is determined as the β crystal-forming ability. Incidentally, the calibration for the amount of heat of fusion was performed by using indium.

```
β crystal-forming ability (%) = [ΔHβ/(ΔHα + ΔHβ)] x 100
```

Incidentally, by calculating the abundance ratio of the β crystal from the melting peaks observed during the first run, the β-crystal formability in the state of that specimen can be calculated. The measurement was performed twice for each sample, and average values obtained from the measurements were used to perform evaluation.

**(2) Blood barrier property**

On the basis of the procedure D described in JIS T8060:2007, the blood barrier property was measured and evaluated on a scale of classes 1 to 6.

**(3) Viral barrier property**

On the basis of the procedure D1 described in JIS T8061:2010, the viral barrier property was measured and evaluated on a scale of classes 1 to 6.

**(4) Degree of moisture permeability**

On the basis of the A-1 method (calcium chloride method) described inJISL1099:2012, the degree of moisture permeability was measured and evaluated in the units of $g/m^2 \cdot h$.

**(5) Melt flow rate (MFR)**

The MFR of polypropylene resin is measured on the basis of the conditions M (230°C and 2.16 kg) described in JIS K7210: 1995. The polyethylene resin is subjected to measurement on the basis of the conditions D (190°C and 2.16 kg) described in JIS K7210:1995.

**(6) Puncture strength**

Using a universal testing machine (Autograph AG-IS made by Shimadzu), measurement was performed at 23°C, with a needle entry speed being 5 mm/min and other factors according to JIS Z1707:1997. The load acting on the film when the specimen underwent breakage of the film was read. A value obtained by dividing the load by the pre-test thickness (mm) of the specimen is determined as puncture strength (N/mm). The measurement was performed five times for each sample. Average values thus obtained was used to perform evaluation.

**(7) Thickness**

The thickness of the porous film was evaluated by the following measurement method. Using a dial gauge type thickness meter (JIS B7503:1997, UPRIGHT DIAL GAUGE (0.001 x 2 mm) made by PEACOCK, No. 25, a gauge head being 10 mm$\phi$ and of a flat type, a load of 50 gf), the thickness ($\mu$m) was measured. The measurement was performed ten times for each sample. Thus-obtained average values were used to perform evaluation.

The thicknesses of the nonwoven fabric and the waterproof and moisture-permeable material were evaluated by the following measurement method. The thicknesses thereof were measured on the basis of the A method described in Section 6.1.1 of JIS L1913:2010. Ten test pieces whose size was greater than or equal to 2500 mm$^2$ were collected from a specimen, a pressure of 0.5 kPa was applied to an upper circular horizontal plate of the thickness gauge, and the zero point was adjusted. After that, using the thickness gauge, a pressure of 0.5 kpa was applied to each test piece for 10 seconds in a standard state to measure the thickness to 0.01 mm. An average value for 10 test pieces was found.

**(8) Area thermal shrinkage ratio**

The porous film was cut into squares of 150 mm in the lengthwise direction x 150 mm in the width direction, which were determined as samples. Gauge lines were drawn in a central portion of the sample of each side and an inter-gauge line distance $L_0$ (length) and $L_0$ (width) prior to heating were measured. Each sample was sandwiched between sheets of paper, hung in a hot air oven heated at 130°C, and left at rest for 60 minutes to carry out a heating treatment. After the heat treatment, each sample was left to cool. Then, inter-gauge line distance $L_1$ (length) and $L_1$ (width) subsequent to heating were measured. A value calculated by the following expression was determined as a thermal shrinkage ratio. The measurement was performed five times for each sample. Thus-obtained average values are indicated as area thermal shrinkage ratio in Table 1.

$$\text{[0088]} \quad \text{Area shrinkage ratio (\%)} = 100 - (L_1 \text{ (length)} \times L_1 \text{ (width)})/(L_0 \text{ (length)} \times L_0 \text{ (width)}) \times 100$$

**(9) Melting point (°C)**

Using a differential scanning type calorimeter DSC-60 type made by Shimadzu Corporation, the temperature of 2 mg of a specimen was increased in a nitrogen to a temperature of 50 to 300°C at a temperature increase rate of 10°C/min. The maximum melting endothermic peak temperature during that time was determined as a melting point (Tm). The measurement was performed twice for each sample. Thus obtained average values were used to perform evaluation.

**(10) Bursting strength**

Measurement was performed on the basis of the A method described in Section 8.16.1 of JIS L1096:1999. Five test pieces of 15 cm x 15 cm were collected. A Mullen burst tester was used. Each test piece was placed upward and gripped by a clamp, with a uniform tension applied so that neither wrinkles nor slackness occurred. Then, pressure was applied to measure the strength by which the rubber film broke through the test piece and the strength of only the rubber film at the time of rupture. Using the following expression, bursting strengths were found, and average values thereof were calculated.

$$\text{[0091]} \quad B_S = A - B$$

$B_s$: bursting strength (kPa)
A: strength by which the rubber film breaks through the test piece
B: strength of the rubber film alone at the time of rupture

**(11) Mass (basis weight: g/m$^2$) per unit area**

Measurement was performed on the basis of Section 6.2 of JIS L1913:2010. From each specimen, five test pieces having a size of 25 cm x 25 cm were collected. Their weights were measured and an average value thereof was found. The average value was multiplied by 16 to determine a mass ($g/m^2$) per unit area.

### (12) Tensile strength

Measurement was performed on the basis of Section of 6.3.1 of JIS L1913:2010. Test pieces cut out to have a width of 50 mm and a length of 300 mm were subjected to a tensile test using a constant rate extension tensile testing machine with respect to three samples for each of the sheet longitudinal direction and lateral direction in conditions of the length of specimen between grips being 200 mm and the tension speed being 100 mm/min. The maximum strength at the time of pulling the sample until it ruptured was determined as the tensile strength. An average value of maximum tenacities for each of the sheet's longitudinal direction and lateral direction was calculated. Of the tensile strengths in the longitudinal and lateral directions, the smaller one was determined as the tensile strength (N/50 mm) of the fiber layer.

### (13) Abrasion strength

Measurement was performed on the basis of Section 6.6.2 of JIS L1913:2010. Five circular test pieces of 13 cm in diameter were collected. At the center of each test piece, a hole of about 6 mm in diameter was opened. A taper abrasion testing machine was used. The surface of each test piece was upward. The load was 2.45 N. An abrasion wheel (CS-10) was used and was rotated for abrasion 100 times at about 70 $min^{-1}$. The grade of the external appearance was determined by using a limit reference picture (Fig. 14 in JIS L1913:2010).

### (14) Water pressure resistance

Measurement was performed on the basis of the B method described in Section 7.1.1 of JIS L1092:2009. From each specimen, five test pieces of about 150 mm x 150 mm were collected and attached to a front side of a water penetration test apparatus so that water strikes the test pieces. Water was put into the cylinder. The piston handle was turned to apply water pressure at a rate of 100 kPa in 1 minute to measure the water pressure (kPa) when water came out, at three location, to the reverse side of a test piece or when the waterproof and moisture-permeable material ruptured. An average value of five measurements was determined as a water pressure resistance.

### (15) Wearing characteristic

A subject wearing a manufactured chemical protective clothing over a shirt and a pair of working pants entered a constant temperature, constant humidity chamber set at 35°C and 50%Rh simulating an outside air temperature in the summertime. The subject had near the center of the chest a thermocouple stuck to the outer side of the shirt, and the temperature inside the protective clothing after the subject entered the chamber was measured by the thermocouple. This was performed on three subjects. The data from the three subjects were compared with those regarding the protective clothing of Comparative Example 101. A protective clothing that, 30 minutes after, had the humidity therein that was at least 10% lower was evaluated as good, and a protective clothing that had an average humidity difference that was less than 10% was evaluated as bad.

### (16) Bonded area ratio

In the case where the embossing pattern is a pattern having identical pattern elements, such as cross shapes, round shapes, or ellipses, a specimen having a specimen size of 15 cm x 15 cm was photographed at a magnification of 50 times by using a VHX2000 made by Keyence and, measuring maximum area, setting within the range of a threshold value $\pm$ 10 being set, was analyzed to calculate the bonded area ratio of the specimen. The bonded area ratio was measured with respect to five specimens, and an average value thereof was calculated.

In the case where the pattern element of the embossing pattern was not left-right symmetrical but was an irregular pattern element, a specimen having a specimen size of 15 cm x 15 cm was photographed at a magnification of 25 times by using a VHX2000 made by Keyence and, an automatic area measurement-extraction method (luminance) and (threshold value - 20) being set, was analyzed to calculate the bonded area ratio of the specimen. The bonded area ratio was measured with respect to five specimens and an average value thereof was calculated.

### Manufacture method for protective clothing

The moisture-permeable and waterproof materials of examples and comparative examples were cut out in conformity with a paper stencil. To-be-sewn portions of the cut-out moisture-permeable and waterproof materials were sewn by a sewing machine or ultrasonic waves to manufacture protective clothings. The machine-sewn sites were provided with a seam tape of 2 cm wide.

The invention will be described more concretely below on the basis of examples, but the invention is not limited to these.

**(Example 1)**

Raw materials were supplied from a scale hopper into a twin-screw extruder so that, as polypropylene resin, 96.5 mass parts of homopolypropylene made by Prime Polymer Co. , Ltd. whose MFR = 4.0 g/10 min and 3 mass parts of homopolypropylene S10CL made by Prime Polymer Co., Ltd. whose MFR was 1,000 g/10 min, and, further, 0.3 mass part of N,N'-dicyclohexyl-2,6-naphthalene dicarboxyamide (NU-100 made by New Japan Chemical Co. , Ltd.), which is a β crystal nucleating agent, as well as 0.1 mass part of each of "IRGANOX" (registered trademark) 1010 and of "IRGAFOS" (registered trademark) 168 made by BASF, which are antioxidants, were mixed at these ratios. Melt-kneading was performed at 303°C, and the melt was discharged in a strand shape from a die, cooled and solidified in a water tank at 25°C, and cut into a chip shape, whereby a polypropylene composition (A) was obtained.

The obtained polypropylene composition (A) was supplied into a mono-screw melt extruder, and melt extrusion was performed at 220°C. Using a 60 μm cut-off sintered filter, extraneous matters were removed. Then, using a T die, the melt was discharged onto a cast drum whose surface temperature had been controlled to 117°C, whereby a cast sheet was obtained. Subsequently, using ceramic rolls heated at 125°C, pre-heating was performed to perform drawing to 5 times in the lengthwise direction at a draw speed of 350,000%/min (3500 times/min). Next, the film was introduced into a tenter type drawing machine, with end portions thereof grasped by clips, and pre-heating was performed at 152°C for 3 seconds and then drawing was performed at 150°C to 9.0 times at a draw speed of 3, 500%/min (35 times/min) .

In the subsequent heat treatment step, while the post-drawing inter-clip distance was maintained, a heat treatment was performed at 150°C for 3 seconds. Furthermore, relaxation was performed at 164°C at a relaxation rate of 15%. Then, while the post-relaxation inter-clip distance was maintained, a heat treatment was performed at 164°C for 5 seconds.

After that, the edge portions of the film grasped by tenter clips were removed by slitting, and 500 m of the porous film was wound on a core by a winder. Thus, a porous film of 20 μm in thickness was obtained. Results of evaluation are indicated in Table 1.

**(Example 2)**

Using the ceramic rolls heated to 125°C in the drawing step in Example 1, preheating was performed to perform drawing to 5 times in the lengthwise direction of the film at a draw speed of 400,000%/min (4000 times/min) . Next, the film was introduced into a tenter type drawing machine, with end portions thereof grasped by clips. Then, a porous film of 20 μm in thickness was obtained by applying the same conditions as in Example 1, except that after being preheated at 152°C for 3 seconds, the film was drawn at 150°C to 9.0 times at a draw speed of 4,500%/min (45 times/min). Results of evaluation are indicated in Table 1.

**(Example 3)**

A porous film of 250 μm in thickness was obtained by applying the same conditions as in Example 1, except that in the extrusion step in Example 1, the amount of extrusion was adjusted so that the thickness of the porous film became 250 μm. Results of evaluation are indicated in Table 1.

**(Example 4)**

Raw materials were supplied from a scale hopper into a twin-screw extruder so that as polypropylene resin, 94.5 mass parts of homopolypropylene made by Prime Polymer Co. , Ltd. whose MFR = 4.0 g/10 min and 5 mass parts of homopolypropylene S10CL made by Prime Polymer Co., Ltd. whose MFR was 1,000 g/10 min as well as 0.3 mass part of N,N'-dicyclohexyl-2,6-naphthalene dicarboxyamide (NU-100 made by New Japan Chemical Co., Ltd.), which is a β crystal nucleating agent, and, further, 0.1 mass part of each of "IRGANOX" (registered trademark) 1010 and "IRGAFOS" (registered trademark) 168 made by BASF, which are antioxidants, were mixed at these ratios. Melt-kneading was performed at 303°C and the melt was discharged into a strand shape from a die, cooled and solidified in a water tank at 25°C, and cut into a chip shape. Thus, a polypropylene composition (B) was obtained.

A porous film of 20 μm in thickness was obtained by applying the same conditions as in Example 1, except that the obtained polypropylene composition (B) was used. Results of evaluation are indicated in Table 1.

**(Example 5)**

Raw materials were supplied from a scale hopper into a twin-screw extruder so that as polypropylene resin, 98.5 mass parts of homopolypropylene made by Prime Polymer Co. , Ltd. whose MFR = 4.0 g/10 min and 1 mass part of homopolypropylene S10CL made by Prime Polymer Co., Ltd. whose MFR was 1,000 g/10 min as well as 0.3 mass part of N,N'-dicyclohexyl-2,6-naphthalene dicarboxyamide (NU-100 made by New Japan Chemical Co., Ltd.), which is a β crystal nucleating agent, and, further, 0.1 mass part of each of "IRGANOX" (registered trademark) 1010 and "IRGAFOS" (registered trademark) 168 made by BASF, which are antioxidants, were mixed at these ratios. Melt-kneading was performed at 303°C and the melt was discharged into a strand shape from a die, cooled and solidified in a water tank at 25°C, and cut into a chip shape. Thus, a polypropylene composition (C) was obtained.

A porous film of 20 μm in thickness was obtained by applying the same conditions as in Example 1, except that the obtained polypropylene composition (C) was used. Results of evaluation are indicated in Table 1.

**(Comparative example 1)**

Raw materials were supplied from a scale hopper into a twin-screw extruder so that as polypropylene resin, 99.5 mass parts of homopolypropylene FLX80 E4 made by Sumitomo Chemical Company, Limited whose MFR = 7.5 g/10 min, 0.3 mass part of N,N'-dicyclohexyl-2,6-naphthalene dicarboxyamide (NU-100 made by New Japan Chemical Co. , Ltd.), which is a β crystal nucleating agent, and, further, 0.1 mass part of each of "IRGANOX" (registered trademark) 1010 and "IRGAFOS" (registered trademark) 168 made by BASF, which are antioxidants, were mixed at these ratios. Melt-kneading was performed at 303°C and the melt was discharged into a strand shape from a die, cooled and solidified in a water tank at 25°C, and cut into a chip shape. Thus, a polypropylene composition (D) was obtained.

The obtained polypropylene composition (D) was supplied into a mono-screw melt extruder, and melt extrusion was performed at 220°C. Using a 60 μm cut-off sintered filter, extraneous matters were removed. Then, using a T die, the melt was discharged onto a cast drum whose surface temperature had been controlled to 117°C, whereby a cast sheet was obtained. Subsequently, using ceramic rolls heated at 120°C, preheating was performed to perform drawing to 5.2 times in the lengthwise direction of the film at a draw speed of 150,000%/min (1500 times/min). Next, the film was introduced into a tenter type drawing machine, with end portions thereof grasped by clips. After being preheated at 152°C for 3 seconds, the film was drawn at 150°C to 5.5 times at a draw speed of 1,200%/min (12 times/min). Incidentally, the inter-clip distance in the width direction at the tenter entrance was 150 mm.

In the subsequent heat treatment step, while the post-drawing inter-clip distance was maintained, a heat treatment was performed at 150°C for 3 seconds. Furthermore, relaxation was performed at 164°C at a relaxation rate of 15%. Then, while the post-relaxation inter-clip distance was maintained, a heat treatment was performed at 164°C for 5 seconds.

After that, the edge portions of the film grasped by the tenter clips were removed by slitting, and 500 m of the porous film was wound on a core by a winder. Thus, a porous film of 20 μm in thickness was obtained. Results of evaluation are indicated in Table 1.

**(Comparative example 2)**

The polypropylene composition (A) was supplied into a mono-screw melt extruder and melt extrusion was performed at 220°C. Using a 60 μm cut-off sintered filter, extraneous matters were removed. Then, using a T die, the melt was discharged onto a cast drum whose surface temperature had been controlled to 117°C, whereby a cast sheet was obtained. Subsequently, using the ceramic rolls heated at 125°C, preheating was performed to perform drawing to 5 times in the lengthwise direction of the film at a draw speed of 150,000%/min (1500 times/min). Next, the film was introduced into a tenter type drawing machine, with end portions thereof grasped by clips. After being preheated at 152°C for 3 seconds, the film was drawn at 150°C to 9.0 times at a draw speed of 1,200%/min (12 times/min).

In the subsequent heat treatment step, while the post-drawing inter-clip distance was maintained, a heat treatment was performed at 150°C for 3 seconds. Furthermore, relaxation was performed at 164°C at a relaxation rate of 15%. Then, while the post-relaxation inter-clip distance was maintained, a heat treatment was performed at 164°C for 5 seconds.

After that, the edge portions of the film grasped by the tenter clips were removed by slitting, and 500 m of the porous film was wound on a core by a winder. Thus, a porous film of 20 μm in thickness was obtained. Results of evaluation are indicated in Table 1.

**(Comparative example 3)**

A composition obtained by mixing 40 mass parts of high-density polyethylene powder ("Hi-zex" (registered trademark) 340M, made by Mitsui Chemicals Inc.), 30 mass parts of polyethylene wax ("Hi-wax" (registered trademark) 110P, made by Mitsui Chemicals Inc.), and 30 mass parts of calcium carbonate (trade name: "Start Piggott" (registered trademark) 15A, made by SHIRAISHI CALCIUM KAISHA, LTD. and having an average particle diameter of 0.15 $\mu$m) was supplied into a twin-screw extruder, melted and mixed at 200°C, and then passed through the inside of a T-die to perform extrusion formation into a sheet shape. The sheet-shaped material was placed, in close contact, on a cast drum having a surface temperature of 30°C, and was blown with cold air at 20°C from a not-drum face side to manufacture an undrawn film. Next, the undrawn film was led to and preheated in an oven heated at 125°C, and then was drawn to 3 times in the lengthwise direction and cooled by a roll at 20°C. Subsequently, the film was led to a tenter while two edges of the film were grasped by clips, and was drawn to 5 times (area ratio: longitudinal draw ratio x lateral draw ratio = 15 times) in an atmosphere heated at 120°C. Thus, a porous polyethylene film of 20 $\mu$m in thickness was obtained. Results of evaluation are indicated in Table 1.

[Table 1]

[Table 1]

| | Thickness | Degree of moisture permeability | Puncture strength | Blood barrier property | Viral barrier property | β crystal forming ability | Thermal shrinkage ratio 130°C | Melting point |
|---|---|---|---|---|---|---|---|---|
| | μm | g/m²·h | N/mm | Class | Class | % | % | °C |
| Example 1 | 20 | 420 | 180 | 6 | 3 | 89 | 3.5 | 172 |
| Example 2 | 20 | 360 | 200 | 6 | 4 | 87 | 2.9 | 172 |
| Example 3 | 250 | 360 | 170 | 6 | 6 | 88 | 4.1 | 172 |
| Example 4 | 20 | 440 | 150 | 6 | 3 | 88 | 4.5 | 171 |
| Example 5 | 25 | 350 | 240 | 6 | 6 | 88 | 2.7 | 172 |
| Comparative example 1 | 20 | 480 | 85 | 4 | 1 | 88 | 5.7 | 173 |
| Comparative example 2 | 20 | 460 | 95 | 4 | 2 | 88 | 5.2 | 172 |
| Comparative example 3 | 20 | 380 | 20 | 4 | 1 | - | 20.0 | 132 |

As a cloth for the fiber layer, <Spunbond 1> as follows was used. Physical properties thereof are indicated in Table 2.

**<Spunbond 1>**

Spunbond nonwoven fabric (basis weight of 40 g/m$^2$, tensile strength: 57. 6 N/50 mm, bursting strength: 500 kPa, and abrasion strength: grade 4.5).

**[Table 2]**

[Table 2]

| Material | Basis weight | Thickness | Tensile strength | Bursting strength | Abrasion strength | Melting point |
|---|---|---|---|---|---|---|
| | g/m$^2$ | mm | N/50mm | kPa | Grade | °C |
| Spunbond 1 | 40 | 0.2 | 57.6 | 500 | 4.5 | 165 |

**(Example 101)**

Using a heat press roll with a mesh pattern whose surface had been coated with a fluorine resin and adjusted so that irregular pattern would not be seen, a nonwoven fabric (Spunbond 1) made of polypropylene and having a basis weight of 40 g/m$^2$ and the porous film of Example 1 in a configuration of Spunbond 1, the porous film of Example 1, and Spunbond 1 were subjected to bonding through the use of a roll having a pattern height of 3 mm whose roll surface, except the adhered portions, would not contact the cloth, at a pattern roll temperature of 145°C, a backing roll temperature of 145°C, a roll pressure of 2 MPa, and a processing speed of 5 m/min. Thus, a waterproof and moisture-permeable material whose bonded area was 10% was obtained. The moisture-permeable and waterproof material was cut out in accordance with a paper stencil, and to-be-sewn portions of the cut-out moisture-permeable and waterproof materials are sewn by a sewing machine. Thus, a protective clothing was obtained.

**(Example 102)**

A waterproof and moisture-permeable material was obtained by performing bonding in substantially the same manner as in Example 101, except that the porous film of Example 1, used in Example 101, was substituted by the porous film of Example 2 being adhered. This moisture-permeable and waterproof material was machine sewn in substantially the same manner as in Example 101, whereby a protective clothing was obtained.

**(Example 103)**

A waterproof and moisture-permeable material was obtained by performing bonding in substantially the same manner as in Example 101, except that the porous film of Example 1 used in Example 101 was substituted by the porous film of Example 4 being adhered. This moisture-permeable and waterproof material was machine sewn in substantially the same manner as in Example 101, whereby a protective clothing was obtained.

**(Example 104)**

A waterproof and moisture-permeable material was obtained by performing bonding in substantially the same manner as in Example 101, except that the porous film of Example 1 used in Example 101 was substituted by the porous film of Example 5 being adhered. This moisture-permeable and waterproof material was machine sewn in substantially the same manner as in Example 101, whereby a protective clothing was obtained.

**(Example 105)**

Using an ultrasonic bonder (8400 made by Bobson) (lattice pattern) having an embossing roll with a lattice pattern, mutually facing ones of three layers that were a nonwoven fabric (Spunbond 1) made of polypropylene and having a basis weight of 40 g/m$^2$, the porous film of Example 1, and Spunbond 1 were subjected to bonding at a frequency of 20 thousand Hz and a pressure of 0.03 MPa, so as to form a cross pattern with the bonded area being 10%. Thus, a waterproof and moisture-permeable material was obtained. This moisture-permeable and waterproof material was cut out in accordance with a paper stencil, and to-be-sewn portions of the cut-out moisture-permeable and waterproof materials were sewn by a sewing machine. Thus, a protective clothing was obtained.

**(Example 106)**

A waterproof and moisture-permeable material was obtained in substantially the same manner as in Example 105, except that the porous film of Example 2 was used instead of the porous film of Example 1 used in Example 105. This moisture-permeable and waterproof material was machine sewn in substantially the same manner as in Example 105, whereby a protective clothing was obtained.

**(Example 107)**

A waterproof and moisture-permeable material was obtained in substantially the same manner as in Example 105, except that the porous film of Example 4 was used instead of the porous film of Example 1 used in Example 105. This moisture-permeable and waterproof material was machine sewn in substantially the same manner as in Example 105, whereby a protective clothing was obtained.

**(Example 108)**

A waterproof and moisture-permeable material was obtained in substantially the same manner as in Example 105, except that the porous film of Example 5 was used instead of the porous film of Example 1 used in Example 105. This moisture-permeable and waterproof material was machine sewn in substantially the same manner as in Example 105, whereby a protective clothing was obtained.

**(Example 109)**

A waterproof and moisture-permeable material was obtained in substantially the same manner as in Example 101, except that a two-layer configuration of Spunbond 1 and the porous film of Example 1 was adopted, the pattern roll temperature was 145°C, the backing roll was at a normal temperature, and the roll pressure was 2 MPa. This moisture-permeable and waterproof material was machine sewn in substantially the same manner as in Example 101, whereby a protective clothing was obtained.

**(Example 110)**

A waterproof and moisture-permeable material was obtained in substantially the same manner as in Example 109, except that porous film of Example 1, used in Example 109 was substituted by the porous film of Example 2 being adhered. This moisture-permeable and waterproof material was machine sewn in substantially the same manner as in Example 109, whereby a protective clothing was obtained.

**(Example 111)**

A waterproof and moisture-permeable material by performing fusion processing in substantially the same manner as in Example 109, except that the porous film of the Example 1, used in Example 109, was substituted by the porous film of Example 4 being adhered. This moisture-permeable and waterproof material was machine sewn in substantially the same manner as in Example 109, whereby a protective clothing was obtained.

**(Example 112)**

A waterproof and moisture-permeable material was obtained by performing bonding in substantially the same manner as in Example 109, except that the porous film of Example 1 used in Example 109 was substituted by the porous film of Example 5 being adhered. This moisture-permeable and waterproof material was machine sewn in substantially the same manner as in Example 109, whereby a protective clothing was obtained.

**(Example 113)**

In substantially the same manner as in Example 101, superposition of three layers of Spunbond 1, the porous film of Example 1, and Spunbond 1 was adopted, and a waterproof and moisture-permeable material whose bonded area produced by thermal bonding was 5% was obtained. This moisture-permeable and waterproof material was cut out in accordance with a paper stencil, and to-be-sewn portions of the cut-out moisture-permeable and waterproof material were sewn by a sewing machine. Thus, a protective clothing was obtained.

**(Example 114)**

A waterproof and moisture-permeable material was obtained in substantially the same manner as in Example 101, except that the bonded area was 25%. This moisture-permeable and waterproof material was machine sewn in substantially the same manner as in Example 101, whereby a protective clothing was obtained.

**(Example 115)**

A waterproof and moisture-permeable material was obtained in substantially the same manner as in Example 101, except that the bonded area was 40%. This moisture-permeable and waterproof material was machine sewn in substantially the same manner as in Example 101, whereby a protective clothing was obtained.

**(Example 116)**

A waterproof and moisture-permeable material was obtained in substantially the same manner as in Example 101, except that the bonded area was 50%. This moisture-permeable and waterproof material was machine sewn in substantially the same manner as in Example 101, whereby a protective clothing was obtained.

**(Example 117)**

A protective clothing was obtained in substantially the same manner as in Example 101, except that the sewing method for the protective clothing was ultrasonic sewing.

**(Example 118)**

A protective clothing was obtained in substantially the same manner as in Example 102, except that the sewing method for the protective clothing was ultrasonic sewing.

**(Example 117)**

A protective clothing was obtained in substantially the same manner as in Example 103, except that the sewing method for the protective clothing was ultrasonic sewing.

**(Comparative example 101)**

A commercially sold Tyvek SoftWear III made by DuPont-Asahi Flash Spun Products Co., Ltd. was used.

**(Comparative example 102)**

A waterproof and moisture-permeable material was obtained in substantially the same manner as in Example 101, except that the porous film of Example 1 in Example 101 was substituted by the porous film of Comparative example 1. This moisture-permeable and waterproof material was machine sewn in substantially the same manner as in Example 101, whereby a protective clothing was obtained.

**(Comparative example 103)**

A waterproof and moisture-permeable material was obtained in substantially the same manner as in Example 101, except that the porous film of Example 1 in Example 101 was substituted by the porous film of Comparative example 2. This moisture-permeable and waterproof material was machine sewn in substantially the same manner as in Example 101, whereby a protective clothing was obtained.

**(Comparative example 104)**

A waterproof and moisture-permeable material was obtained in substantially the same manner as in Example 101, except that the porous film of Example 1 in Example 101 was substituted by the porous film of Comparative example 3. This moisture-permeable and waterproof material was machine sewn in substantially the same manner as in Example 101, whereby a protective clothing was obtained.

**(Reference example 201)**

A waterproof and moisture-permeable material was obtained in substantially the same manner as in Example 101, except that the bonded area was 70%. This moisture-permeable and waterproof material was machine sewn in substantially the same manner as in Example 101, whereby a protective clothing was obtained.

**(Reference example 202)**

A bonding method that used a heat press roll was used. The same configuration of Spunbond 1, the porous film of Example 1, and Spunbond 1 as in Example 101 was adopted and bonding was performed through the use of a roll whose pattern height was 0.3 mm, at a roll temperature of 150°C, a roll pressure of 3 MPa, and a processing speed of 2 m/min. Thus, a waterproof and moisture-permeable material was obtained. This moisture-permeable and waterproof material was cut out in accordance with a paper stencil and the to-be-sewn portions of the cut-out moisture-permeable and waterproof material were machine sewn, whereby a protective clothing was obtained.

[Table 3]

[Table 3]

| | Material A | Material B | Material C | Bonding method | Sewing method |
|---|---|---|---|---|---|
| Example 101 | Spunbond 1 | Example 1 | Spunbond 1 | Pinpoint thermal bonding | Machine sewing |
| Example 102 | Spunbond 1 | Example 2 | Spunbond 1 | Pinpoint thermal bonding | Machine sewing |
| Example 103 | Spunbond 1 | Example 4 | Spunbond 1 | Pinpoint thermal bonding | Machine sewing |
| Example 104 | Spunbond 1 | Example 5 | Spunbond 1 | Pinpoint thermal bonding | Machine sewing |
| Example 105 | Spunbond 1 | Example 1 | Spunbond 1 | Ultrasonic bonding | Machine sewing |
| Example 106 | Spunbond 1 | Example 2 | Spunbond 1 | Ultrasonic bonding | Machine sewing |
| Example 107 | Spunbond 1 | Example 4 | Spunbond 1 | Ultrasonic bonding | Machine sewing |
| Example 108 | Spunbond 1 | Example 5 | Spunbond 1 | Ultrasonic bonding | Machine sewing |
| Example 109 | Spunbond 1 | Example 1 | None | Pinpoint thermal bonding | Machine sewing |
| Example 110 | Spunbond 1 | Example 2 | None | Pinpoint thermal bonding | Machine sewing |
| Example 111 | Spunbond 1 | Example 4 | None | Pinpoint thermal bonding | Machine sewing |
| Example 112 | Spunbond 1 | Example 5 | None | Pinpoint thermal bonding | Machine sewing |
| Example 113 | Spunbond 1 | Example 1 | Spunbond 1 | Pinpoint thermal bonding | Machine sewing |
| Example 114 | Spunbond 1 | Example 1 | Spunbond 1 | Pinpoint thermal bonding | Machine sewing |
| Example 115 | Spunbond 1 | Example 1 | Spunbond 1 | Pinpoint thermal bonding | Machine sewing |

(continued)

|  | Material A | Material B | Material C | Bonding method | Sewing method |
|---|---|---|---|---|---|
| Example 116 | Spunbond 1 | Example 1 | Spunbond 1 | Pinpoint thermal bonding | Machine sewing |
| Example 117 | Spunbond 1 | Example 1 | Spunbond 1 | Pinpoint thermal bonding | Ultrasonic sewing |
| Example 118 | Spunbond 1 | Example 2 | Spunbond 1 | Pinpoint thermal bonding | Ultrasonic sewing |
| Example 119 | Spunbond 1 | Example 4 | Spunbond 1 | Pinpoint thermal bonding | Ultrasonic sewing |
| Comparative example 101 | One layer of flashspun nonwoven fabric | None | None | - | Machine sewing |
| Comparative example 102 | Spunbond 1 | Comparative example 1 | Spunbond 1 | Pinpoint thermal bonding | Machine sewing |
| Comparative example 103 | Spunbond 1 | Comparative example 2 | Spunbond 1 | Pinpoint thermal bonding | Machine sewing |
| Comparative example 104 | Spunbond 1 | Comparative example 3 | Spunbond 1 | Pinpoint thermal bonding | Machine sewing |
| Reference example 201 | Spunbond 1 | Example 1 | Spunbond 1 | Pinpoint thermal bonding | Machine sewing |
| Reference example 202 | Spunbond 1 | Example 1 | Spunbond 1 | Embossing heat bonding | Machine sewing |

[Table 4]

[Table 4]

| | Bonded area ratio (%) | Basis weight (g/m²) | Thickness (mm) | Degree of moisture permeability (g/m²·h) | Abrasion strength (Grade) | Tensile strength (N/50mm) | Bursting strength (kPa) | Water pressure resistance (kPa) | Blood barrier property (Class) | Viral barrier property (Class) | Wearing characteristic |
|---|---|---|---|---|---|---|---|---|---|---|---|
| Example 101 | 10 | 95 | 0.3 | 360 | 4.5 | 125 | 1320 | 92 | 6 | 3 | good |
| Example 102 | 10 | 95 | 0.3 | 315 | 4.5 | 130 | 1330 | 103 | 6 | 4 | good |
| Example 103 | 10 | 95 | 0.3 | 380 | 4.5 | 123 | 1320 | 87 | 6 | 3 | good |
| Example 104 | 10 | 97 | 0.3 | 310 | 4.5 | 132 | 1320 | 105 | 6 | 6 | good |
| Example 105 | 10 | 95 | 0.3 | 365 | 4.5 | 122 | 1310 | 93 | 6 | 3 | good |
| Example 106 | 10 | 95 | 0.3 | 305 | 4.5 | 124 | 1300 | 105 | 6 | 4 | good |
| Example 107 | 10 | 95 | 0.3 | 375 | 4.5 | 116 | 1320 | 89 | 6 | 3 | good |
| Example 108 | 10 | 97 | 0.3 | 300 | 4.5 | 126 | 1310 | 108 | 6 | 6 | good |
| Example 109 | 10 | 50 | 0.2 | 355 | 4.5 | 57 | 650 | 43 | 6 | 3 | good |
| Example 110 | 10 | 50 | 0.2 | 295 | 4.5 | 69 | 660 | 50 | 6 | 4 | good |
| Example 111 | 10 | 50 | 0.2 | 360 | 4.5 | 56 | 660 | 40 | 6 | 3 | good |
| Example 112 | 10 | 52 | 0.2 | 290 | 4.5 | 67 | 650 | 52 | 6 | 6 | good |
| Example 113 | 5 | 95 | 0.3 | 375 | 4.5 | 109 | 1100 | 87 | 6 | 3 | good |
| Example 114 | 25 | 95 | 0.3 | 345 | 4.5 | 126 | 1360 | 105 | 6 | 3 | good |
| Example 115 | 40 | 95 | 0.3 | 315 | 4.5 | 128 | 1460 | 108 | 6 | 3 | good |
| Example 116 | 50 | 95 | 0.3 | 300 | 4.5 | 125 | 1210 | 114 | 6 | 3 | good |
| Example 117 | 10 | 95 | 0.3 | 360 | 4.5 | 125 | 1320 | 92 | 6 | 3 | good |
| Example 118 | 10 | 95 | 0.3 | 315 | 4.5 | 130 | 1330 | 103 | 6 | 4 | good |
| Example 119 | 10 | 95 | 0.3 | 380 | 4.5 | 123 | 1320 | 87 | 6 | 3 | good |
| Comparative example 101 | 0 | 45 | 0.2 | 283 | 4.5 | 68 | 730 | 12 | 3 | 3 | bad |
| Comparative example 102 | 10 | 95 | 0.3 | 410 | 4.5 | 125 | 1050 | 55 | 4 | 1 | good |

(continued)

|  | Bonded area ratio | Basis weight | Thickness | Degree of moisture permeability | Abrasion strength | Tensile strength | Bursting strength | Water pressure resistance | Blood barrier property | Viral barrier property | Wearing characteristic |
|---|---|---|---|---|---|---|---|---|---|---|---|
|  | % | g/m² | mm | g/m²·h | Grade | N/50mm | kPa | kPa | Class | Class |  |
| Comparative example 103 | 10 | 95 | 0.3 | 395 | 4.5 | 120 | 1100 | 58 | 4 | 2 | good |
| Comparative example 104 | 10 | 95 | 0.3 | 330 | 3.0 | 114 | 520 | 13 | 4 | 1 | good |
| Reference example 201 | 70 | 95 | 0.3 | 255 | 4.5 | 112 | 495 | 65 | 6 | 3 | bad |
| Reference example 202 | 100 | 95 | 0.3 | 200 | 3.0 | 100 | 285 | 61 | 6 | 3 | bad |

The examples that satisfy the requirements of the invention can be suitably used as a waterproof and moisture-permeable material and a protective clothing that are excellent in barrier properties, such as blood barrier property and viral barrier property, and that reduce the stuffing feeling at the time of being worn and are excellent in the wearing comfortableness. On the other hand, the comparative examples were insufficient in favorable achievement in all of moisture permeability, puncture strength, and barrier properties, and therefore were insufficient as a waterproof and moisture-permeable material and a protective clothing.

**Claims**

1. A porous film whose degree of moisture permeability is greater than or equal to 150 g/m$^2$·h, and whose puncture strength is greater than or equal to 100 N/mm, and whose blood barrier property is class 4 or higher.

2. A porous film whose degree of moisture permeability is greater than or equal to 150 g/m$^2$·h, and whose puncture strength is greater than or equal to 100 N/mm, and whose viral barrier property is class 3 or higher.

3. A porous film whose degree of moisture permeability is greater than or equal to 150 g/m$^2$·h, and whose puncture strength is greater than or equal to 100 N/mm, and whose blood barrier property is class 4 or higher, and whose viral barrier property is class 3 or higher.

4. The porous film according to any one of Claims 1 to 3, wherein an area thermal shrinkage ratio subsequent to processing at 130°C for one hour is less than or equal to 10%.

5. The porous film according to any one of Claims 1 to 4, which includes a polyolefin resin.

6. The porous film according to Claim 5, wherein the polyolefin resin is polypropylene.

7. A substrate for a medical textile which uses the porous film according to any one of Claims 1 to 6.

8. A waterproof and moisture-permeable material in which at least a fiber layer and the porous film according to any one of Claims 1 to 6 are layered on each other, wherein mutually adjacent ones of layers that constitute the waterproof and moisture-permeable material are adhered to each other and the mutually adjacent layers are adhered at an area that, in terms of a unit area of the waterproof and moisture-permeable material, is less than or equal to 50% of the unit area.

9. The waterproof and moisture-permeable material according to Claim 8, wherein the degree of moisture permeability is greater than or equal to 150 g/m$^2$·h.

10. The waterproof and moisture-permeable material according to Claim 8 or 9, wherein the viral barrier property is class 3 or higher.

11. The waterproof and moisture-permeable material according to any one of Claims 8 to 10, wherein a melting point difference between materials that constitute the fiber layer and the porous film is less than or equal to 40°C.

12. The waterproof and moisture-permeable material according to any one of Claims 8 to 11, whose water pressure resistance is greater than or equal to 30 kPa.

13. A medical clothing that uses the waterproof and moisture-permeable material according to any one of Claims 8 to 12.

14. A protective clothing that uses the waterproof and moisture-permeable material according to any one of Claims 8 to 12.

15. A production method for the waterproof and moisture-permeable material according to any one of Claims 8 to 12, the production method for the waterproof and moisture-permeable material which includes the step of superposing mutually adjacent layers that constitute the waterproof and moisture-permeable material on each other and the step of performing a heat treatment on a to-be-adhered site on the superposed mutually adjacent layers.

## INTERNATIONAL SEARCH REPORT

| International application No. |
| --- |
| PCT/JP2014/081743 |

A. CLASSIFICATION OF SUBJECT MATTER
*C08J9/00*(2006.01)i, *B32B5/24*(2006.01)i, *B32B7/02*(2006.01)i, *B32B27/32*
(2006.01)i

According to International Patent Classification (IPC) or to both national classification and IPC

B. FIELDS SEARCHED

Minimum documentation searched (classification system followed by classification symbols)
C08J9/00, B32B5/24, B32B7/02, B32B27/32

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2007-100056 A  (Mitsui Chemicals, Inc.),<br>19 April 2007 (19.04.2007),<br>claim 1; paragraphs [0034], [0035], [0054] to<br>[0056], [0061], [0071] to [0073], [0077]<br>(Family: none) | 1-7<br>8-15 |
| A | JP 2011-184807 A  (Unitika Trading Co., Ltd.),<br>22 September 2011 (22.09.2011),<br>paragraphs [0011], [0012], [0014], [0018]<br>(Family: none) | 1-15 |

| ☒ | Further documents are listed in the continuation of Box C. | | ☐ | See patent family annex. |

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>   24 February 2015 (24.02.15) | Date of mailing of the international search report<br>   10 March 2015 (10.03.15) |
| --- | --- |
| Name and mailing address of the ISA/<br>   Japan Patent Office<br>   3-4-3,Kasumigaseki,Chiyoda-ku,<br>   Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2014/081743

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-500258 A (E.I. Du Pont de Nemours & Co.),<br>07 January 2003 (07.01.2003),<br>claims 1, 13; paragraphs [0003], [0005], [0012], [0015]<br>& US 6410465 B1 & EP 1189748 A1<br>& WO 2000/073058 A1 | 1-15 |
| A | JP 2011-256402 A (Mitsubishi Plastics, Inc.),<br>22 December 2011 (22.12.2011),<br>claims; paragraphs [0001], [0002]<br>& US 2012/0101180 A1 & EP 2444453 A1<br>& WO 2010/147149 A1 | 1-15 |
| A | JP 2003-306564 A (Sumitomo Chemical Co., Ltd.),<br>31 October 2003 (31.10.2003),<br>paragraphs [0001], [0005], [0008], [0061]<br>(Family: none) | 1-15 |

Form PCT/ISA/210 (continuation of second sheet) (July 2009)

**EP 3 078 704 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI978464 A
- JP 2005515912 W
- JP 2013053386 A
- JP HEI5310665 A